# EUROPEAN PATENT SPECIFICATION

(11) **EP 4 568 214 B1**
(45) Date of publication and mention of the grant of the patent: **12.08.2026**
(21) Application number: 23851522.5
(22) Date of filing: 10.07.2023
(51) Int. Cl.: H04L 41/0896, H04L 43/087, H04L 43/0876, H04L 43/0852, H04L 41/0806, H04J 3/16, H04L 1/00

(54) **SERVICE INFORMATION PROCESSING METHOD, NETWORK DEVICE, AND STORAGE MEDIUM**
DIENSTINFORMATIONSVERARBEITUNGSVERFAHREN, NETZWERKVORRICHTUNG UND SPEICHERMEDIUM
PROCÉDÉ DE TRAITEMENT DE SERVICE, DISPOSITIF RÉSEAU ET SUPPORT DE STOCKAGE

(30) Priority: 12.08.2022 CN 202210968517
(43) Date of publication of application: 11.06.2025
(73) Proprietor: ZTE Corporation, Shenzhen, Guangdong 518057 (CN)
(72) Inventor: LIU, Feng, Shenzhen, Guangdong 518057 (CN)
(74) Representative: Savi, Massimiliano
(86) International application number: PCT/CN2023/106661
(87) International publication number: WO 2024/032297

(56) References cited:
- WO-A1-2019/062227
- WO-A1-2019/062227
- CN-A- 108 809 901
- CN-A- 113 316 037
- CN-A- 113 645 524

## Description

### TECHNICAL FIELD

Embodiments of the present disclosure relate to the technical field of communication, and more particularly, to a service information processing method, a network device, and a storage medium.

### BACKGROUND

There are two types of services in network communications: high-quality of service (QoS) services and ordinary Ethernet services. A high-QoS service requires an exclusive bearer pipeline. For example, some cells may be selected separately to bear the high-QoS service. An ordinary Ethernet service does not require an exclusive bearer pipeline. For example, multiple ordinary Ethernet services can be carried in one cell. However, in the existing technologies, to implement bearer of an ordinary Ethernet service, information of the ordinary Ethernet service needs to be encoded into 66-bit code blocks using 64B/66B coding, and then the 66-bit code blocks are converted into a bit stream or bytes, which are subsequently mapped to and carried by a payload area of a cell. This process, however, increases the complexity of the implementation of service bearer, reduces the bearer efficiency of the cell, and is likely to cause waste of bandwidth.

WO2019062227A1 relates to a data transmission method, transmission device and transmission system. The data transmission method comprises: acquiring at least one 64B/66B code block stream, the rate of each 64B/66B code block stream being a positive integer multiple of 5G; mapping at least one 64B/66B code block stream to a corresponding time slot of at least one flexible optical transport network (FlexO) frame; adding a FlexO overhead to at least one FlexO frame to form a FlexO code block stream; and transmitting the FlexO code block stream.

### SUMMARY

The invention is set out in the appended set of claims.

Embodiments of the present disclosure provide a service information processing method, a network device, and a storage medium.

In accordance with a first aspect of the present disclosure, an embodiment provides a service information processing method, including: mapping first service information to a first cell, and sending the first cell; and placing second service information at a second cell, and sending the second service information at the second cell.

In accordance with a second aspect of the present disclosure, an embodiment provides a network device, including: a memory, a processor, and a computer program stored in the memory and executable by the processor, where the computer program, when executed by the processor, causes the processor to implement the service information processing method described above.

In accordance with a third aspect of the present disclosure, an embodiment provides a computer-readable storage medium, storing computer-executable instructions which, when executed by a processor, causes the processor to implement the service information processing method described above.

In accordance with a fourth aspect of the present disclosure, an embodiment provides a computer program product, including a computer program or computer instructions stored in a computer-readable storage medium, where the computer program or computer instructions, when read from the computer-readable storage medium and executed by a processor of a computer device, cause the computer device to implement the service information processing method described above.

### BRIEF DESCRIPTION OF DRAWINGS

FIG. 1 is a schematic diagram of a high-QoS service and an ordinary Ethernet carried in cells according to an embodiment of the present disclosure;
FIG. 2 is a flowchart of a service information processing method according to an embodiment of the present disclosure;
FIG. 3 is a schematic diagram of Ethernet common public radio interface service information carried in a cell according to an example of the present disclosure;
FIG. 4 is a schematic diagram of a cell structure according to an example of the present disclosure;
FIG. 5 is a schematic diagram of a cell structure according to another example of the present disclosure;
FIG. 6 is a schematic diagram of cells with sequence numbers according to an embodiment of the present disclosure;
FIG. 7 is a flowchart of an implementation of S120 in FIG. 2;
FIG. 8 is a flowchart of performing fragmented encoding on second service information according to an embodiment of the present disclosure;
FIG. 9 is a schematic diagram showing two neighboring pieces of code fragment information having different lengths according to an embodiment of the present disclosure;
FIG. 10 is a flowchart of an implementation of S210 in FIG. 7;
FIG. 11 is a schematic diagram of cell locations corresponding to first service information and second service information according to an embodiment of the present disclosure;
FIG. 12 is a schematic diagram of removing a start code block and an end code block between two neighboring pieces of target code fragment information according to an embodiment of the present disclosure;
FIG. 13 is a schematic diagram of code fragment information when there is no target data packet according to an embodiment of the present disclosure;
FIG. 14 is a schematic diagram of a start code block of ordinary Ethernet service information according to an embodiment of the present disclosure;
FIG. 15 is a schematic diagram of a start code block of a second cell according to an embodiment of the present disclosure;
FIG. 16 is a schematic diagram of a start code block of a second cell according to another embodiment of the present disclosure;
FIG. 17 is a schematic diagram of a second cell start code block carrying a fragment sequence number according to an embodiment of the present disclosure;
FIG. 18 is a schematic diagram showing that a start code block of a second cell carries a fragment sequence number according to an embodiment of the present disclosure;
FIG. 19 is a schematic diagram of field contents of a first piece of code fragment information interrupted from being sent according to an embodiment of the present disclosure;
FIG. 20 is a schematic diagram of field contents of subsequent code fragment information interrupted from being sent according to an embodiment of the present disclosure;
FIG. 21 is a flowchart of a service information processing method according to another embodiment of the present disclosure;
FIG. 22 is a schematic structural diagram of a cell start code block that does not carry service type information according to an embodiment of the present disclosure;
FIG. 23 is a schematic diagram of a cell structure according to another example of the present disclosure;
FIG. 24 is a schematic diagram of ordinary Ethernet service information carried in a payload area according to an example of the present disclosure;
FIG. 25 is a flowchart of an implementation of S420 in FIG. 21;
FIG. 26 is a flowchart of an implementation of S430 in FIG. 21;
FIG. 27 is a flowchart of a service information processing method according to another embodiment of the present disclosure;
FIG. 28 is a flowchart of an implementation of S740 in FIG. 27; and
FIG. 29 is a schematic diagram of a network device according to an embodiment of the present disclosure.

### DETAILED DESCRIPTION

To make the objects, technical schemes, and advantages of the present disclosure clearer, the present disclosure is described in further detail in conjunction with accompanying drawings and embodiments. It should be understood that the embodiments described herein are merely used for illustrating the present disclosure, and are not intended to limit the present disclosure.

It is to be noted, although logical orders have been shown in the flowcharts, in some cases, the steps shown or described may be executed in an order different from the orders as shown in the flowcharts. In the specification, claims, and the description of the accompanying drawings, the term "plurality of" (or multiple) means at least two, the term such as "greater than", "less than", "exceed" or variants thereof prior to a number or series of numbers is understood to not including the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

Embodiments of the present disclosure include: mapping first service information to a first cell, and sending the first cell; and placing second service information at a second cell, and sending the second service information at the second cell. In other words, by placing second service information at a second cell and directly sending the second service information at the second cell, the mapping process of carrying the second service information in a cell by mapping is omitted, such that the mapping process can be simplified, the bearer efficiency is improved, and the bandwidth utilization is improved.

It should be noted that the change of information content in a communication network also leads to the change of the structure of the communication network. Previously, the communication content was mainly voice service, and the voice service belonged to a Constant Bit Rate (CBR) service, which is a high-QoS service. The high-QoS service refers to service information that requires an exclusive bearer pipeline which can provide low-delay, low-jitter, and high-reliability bearer services. Low delay refers to a delay less than a preset delay value. Low jitter refers to a jitter value less than a preset jitter value. High reliability refers to the ability to provide QoS guarantee of different service priorities. In addition, the preset delay value and the preset jitter value may be set according to an actual situation. Since Synchronous Digital Hierarchy (SDH) networks and optical transport network (OTN) bearer networks can provide an exclusive bearer pipeline for the transmission of the voice service, the voice service can be carried in communication networks based on the SDH technology and the OTN technology. This greatly satisfies the bearer demand of the voice service, but the bearer cost of the exclusive bearer pipeline is high.

At present, with the development of communication technologies, the Ethernet packet service has become the main content borne in a communication network, and the communication network technology has also changed to an Ethernet technology. The Ethernet technology adopts a statistical multiplexing mode, which transmits customer services in a shared mode, i.e., all customer services share the same bearer pipeline through statistical multiplexing, and the bearer pipeline carries customer services with best effort. Therefore, the shared multiplexing mode of Ethernet technology can increase the utilization of the bearer pipeline, improve the bearer efficiency, and reduce the bearer cost, but its QoS is unsatisfactory.

Most Ethernet services are ordinary services, i.e., ordinary Ethernet services, which require low bearer quality, but high bearer efficiency and low bearer cost. Therefore, how to realize the joint bearer of a high-QoS service and an ordinary Ethernet service while meeting the bearer quality requirement of the high-QoS service is an urgent problem to be solved.

In the related technologies, cells are isolated from each other and do not affect each other. Therefore, when the high-QoS service is transmitted on some cells and the ordinary Ethernet service is transmitted on other cells, the high-QoS service and the ordinary Ethernet service are isolated from each other and do not affect each other, thus realizing the hybrid transmission of the high-QoS service and the ordinary Ethernet service on one physical pipeline.

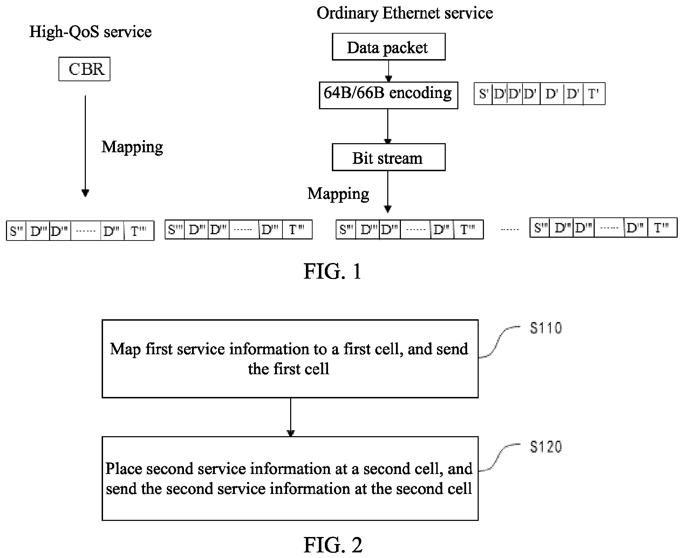

As shown in FIG. 1, when an ordinary Ethernet service is to be transmitted at a rate of 10G or above (such as 25G, 50G, 100G, 200G, 400G, etc.), the ordinary Ethernet service needs to be subjected to 64B/66B encoding before transmission. In the 64B/66B encoding, 8 bytes (i.e., 64 bits) of data information are extracted from a data packet first, a 2-bit synchronization header is added in front of the 64-bit data information to expand the 64-bit information code block into a 66-bit information code block. Then, the 66-bit information code block is converted into a bit stream (or bytes), and then mapped to and carried by a payload area of a cell. Finally, the cell is sent. After receiving the data stream, a receive end identifies an information code block having a length of 66 bits from the data stream, recovers the original 64-bit data information from the information code block, and then reassembles the 64-bit data information into the original data packet. It can be understood that a code block is briefly referred to as a block, for example, a 66-bit code block is briefly referred to as a 66-bit block, which is not particularly limited herein. The high-QoS service (e.g., a CBR service) only needs to be directly mapped to a first cell and sent through the first cell.

For the ordinary Ethernet service, since only 64 bits in the data code block of one cell can carry the ordinary Ethernet service, the encoded ordinary Ethernet service information (i.e., the 66-bit code block) needs to be carried in data code blocks of two cells. Because the 66-bit code block corresponding to the ordinary Ethernet service needs to be carried in the data code block of the cell by mapping, the complexity of the process of converting the bit code block into a bit stream or bytes is increased. Moreover, the bearer efficiency of cells is limited, and the smaller the cell, the lower the bearer efficiency. Therefore, the method of carrying an ordinary Ethernet service on cells by mapping will cause a waste of bandwidth. In view of the above, how to reduce the mapping complexity caused by carrying ordinary Ethernet service information in cells and improve the bearer efficiency of ordinary Ethernet service information is an urgent problem to be solved.

It should be noted that in all the following embodiments, a start code block of a data packet is represented by S', an end code block of a data packet is represented by T', a fragment start code block is represented by S", a fragment end code block is represented by T", a start code block of a cell is represented by S"', an end code block of a cell is represented by T"', a data code block of a data packet is represented by D', and a fragment data code block is represented by D".

Based on the above analysis, the embodiments of the present disclosure will be further described in detail below in conjunction with the accompanying drawings.

FIG. 2 is a flowchart of a service information processing method according to an embodiment of the present disclosure. The service information processing method may include the following steps S110 and S 120.

At S110, first service information is mapped to a first cell, comprising encoding the first service information, then converting encoded code blocks into a bit stream or bytes, and then mapping the bit stream or bytes to and carrying the bit stream or bytes by the first cell, and the first cell is sent.

At S120, second service information is placed at a second cell, and the second service information at the second cell is sent, the first cell and the second cell are each formed by a plurality of code blocks assembled in sequence from a start code block, a data code block, and an end code block.

A location of the first cell in the cell stream is not the same as a location of the second cell in the cell stream.

In an embodiment, the first service information may be high-QoS service information, such as a CBR service, high-QoS Ethernet service information (e.g., ethernet Common Public Radio Interface (eCPRI) service information), voice service information, video service information, game service information, etc. The high-QoS service information may be encapsulated in various formats, such as an eCPRI protocol message format or an Ethernet packet format. The first service information may also be ordinary Ethernet service information. The second service information may be ordinary Ethernet service information, such as download service information or the like, or may be high-QoS service information, which is not particularly limited herein.

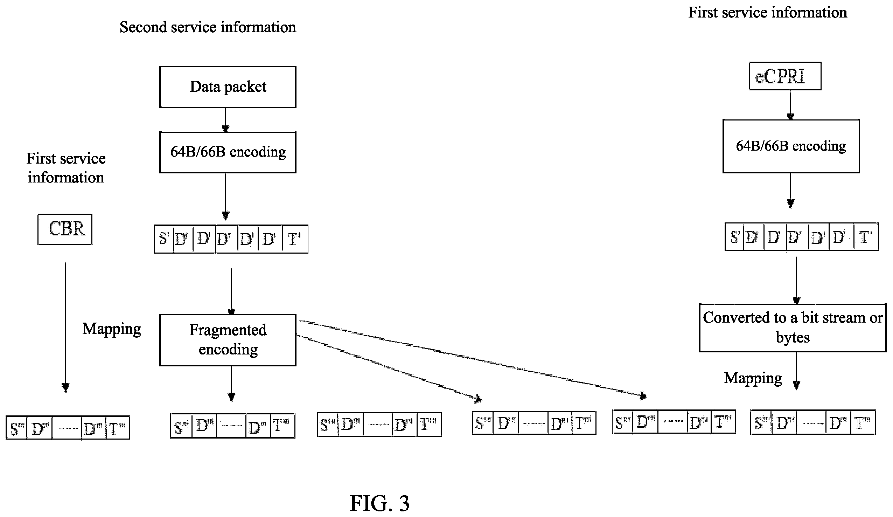

In an embodiment, as shown in FIG. 3, assuming that the first service information is eCPRI service information, the eCPRI service information may be encoded into 66-bit code blocks by 64B/66B coding, and then the 66-bit code blocks are converted into a bit stream or bytes and then mapped to and carried by the first cell, which is not particularly limited herein.

In an embodiment, the first cell or the second cell may be carried over an Ethernet interface, a Flexible Ethernet (FlexE) slot, or any other physical or logical interface capable of carrying cells, which is not particularly limited herein.

It can be understood that since the content sent by the Ethernet interface is 66-bit code blocks, the first cell carrying the first service information and the second cell carrying the second service information are also formed by 66-bit blocks, such that the cell can be directly sent and received over the Ethernet interface. In a 66-bit code block defined by a 64B/66B encoding rule, the first two bits are a synchronization header of the code block. The 2-bit synchronization header has a fixed value of "01" or "10". "01" indicates that the 66-bit code block is a data code block (or referred to as a D code block or D block), which is padded with 8 bytes (i.e., 64 bits) of digital information. "10" indicates that the 66-bit code block is a control code block (briefly referred to as a control block). The first byte immediately following the synchronization header indicates the type of the control code block, and the next seven bytes indicates the content of the control code block (e.g., data information, or control information, or a combination of data information and control information), which is determined by the type of the control code block. In addition, the control code block further includes a start code block (or referred to as an S block), an end code block (or referred to as a T block), an idle code block, a fault maintenance code block, and the like. The start code block is a start flag of a data code block, and the end code block is an end flag of a data code block. In addition, in Ethernet 802.3 standards, there are eight types of end code blocks: namely, T₀, T₁, T₂, T₃, T₄, T₅, T₆, and T₇. The first byte of T₀ is 0x87, and does not carry at least one of an overhead field, indication information for indicating an order of the cells, service type information, or fault indication information. The first byte of T₁ is 0x99, and carries at least one of an overhead field of one byte, indication information for indicating an order of the cells, service type information, or fault indication information. The first byte of T₂ is 0x99, and carries at least one of an overhead field of two bytes, indication information for indicating an order of the cells, service type information, or fault indication information. Similarly, the first byte of T₇ is 0x99, and carries at least one of an overhead field of seven bytes, indication information for indicating an order of the cells, service type information, or fault indication information.

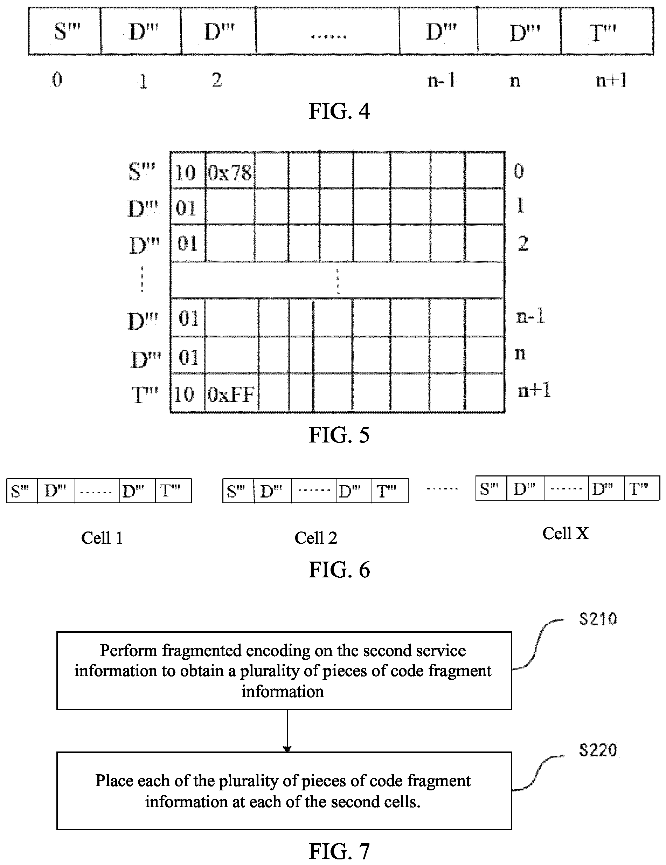

In an embodiment, the cell structures of the first cell and the second cell are each formed by a plurality of code blocks having a length of 66 bits defined in the 64B/66B encoding rule, i.e., assembled from a start code block of the cell, a data code block of the cell, and an end code block of the cell in sequence. The number of data code blocks in the cell is defined as n, n being a positive integer. The data code block is used for carrying at least one of an overhead field, indication information for indicating an order of the cells, service type information, or fault indication information. The start code block of the cell is a start flag of the cell. The end code block of the cell is an end flag of the cell. As shown in FIG. 4, S‴ represents the start code block of the cell, D‴ represents the data code block of the cell, and T‴ represents the end code block of the cell. Since the start code block of the cell is also a code block having a length of 66 bits, the last seven bytes in the start code block of the cell may carry at least one of an overhead field, indication information for indicating an order of the cells, service type information, or fault indication information. Similarly, the last few bytes in the end code block may also carry at least one of an overhead field, indication information for indicating an order of the cells, service type information, or fault indication information. For example, the last seven bytes of T₇ may carry at least one of an overhead field of seven bytes, indication information for indicating an order of the cells, service type information, or fault indication information. As shown in FIG. 5, each of unpadded squares represents a byte location that can be used for padding at least one of an overhead field, indication information for indicating an order of the cells, service type information, or fault indication information. In addition, as shown in FIG. 6, both the first cell and the second cell carry sequence numbers 1, 2, ..., X (X being a positive integer), which occur cyclically from 1 to X, and can be used to determine the locations of the cells, which is not particularly limited herein.

In this embodiment, with the service information processing method including the above steps S110 to S120, first service information is mapped to a first cell, and the first cell is sent; and second service information is placed at a second cell, and the second service information at the second cell is sent. A location of the first cell in the cell stream is not the same as a location of the second cell in the cell stream. In other words, by placing second service information at a second cell and directly sending the second service information at the second cell, the mapping process of carrying the second service information in a cell by mapping is omitted, such that the mapping process can be simplified, the bearer efficiency is improved, and the bandwidth utilization is improved.

In an embodiment, as shown in FIG. 7, S120 is further described, and S120 includes the following steps S210 and S220.

At S210, fragmented encoding is performed on the second service information to obtain a plurality of pieces of code fragment information.

In an embodiment, the code fragment information includes a fragment start code block, a fragment data code block, and a fragment end code block.

At S220, each of the plurality of pieces of code fragment information is placed at each of the second cells.

In an embodiment, a cell cycle may include only one second cell. Alternatively, a cell cycle may include a plurality of second cells having different sequence numbers. For example, one cell cycle includes a second cell having a sequence number of 1, a second cell having a sequence number of 2, ..., and a second cell having a sequence number of X, where X is a positive integer. Alternatively, different cell cycles may include second cells having the same sequence number. For example, a first cell cycle includes a second cell having a sequence number of 1 and a second cell having a sequence number of 2, and a second cell cycle may also include the second cell having the sequence number of 1 and the second cell having the sequence number of 2, which is not particularly limited herein.

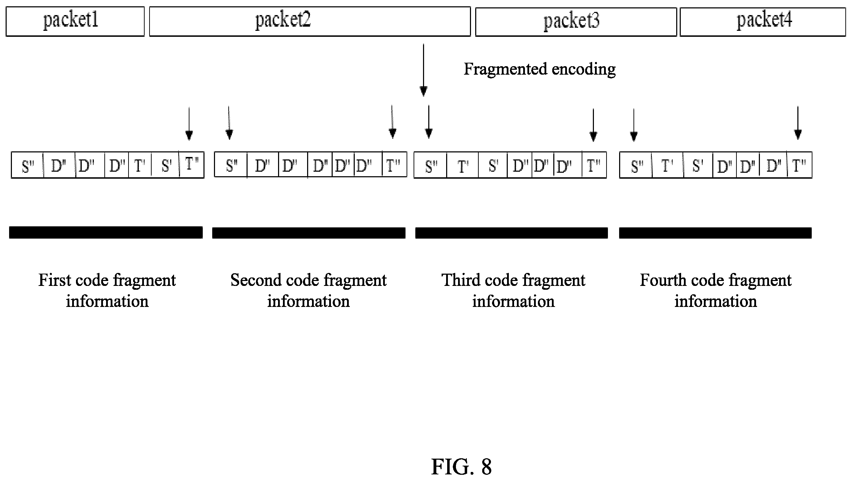

In an embodiment, a length of the code fragment information may be equal to a length of the second cell. Therefore, after each of the plurality of pieces of code fragment information is placed at each of the second cells, the fragment start code block of each of the plurality of pieces of code fragment information is placed at the start code block of a corresponding second cell, and the fragment end code block of each of the plurality of pieces of code fragment information is placed at the end code block of a corresponding second cell. In some embodiments, as shown in FIG. 8, it is assumed that the length of the second cell is seven code blocks, and the second service information is a customer packet including four data packets, namely, packet1, packet2, packet3, and packet4. In this case, during 64B/66B encoding of the data packets in the customer packet, the customer packet may be cut into fragments, a plurality of pieces of code fragment information each having a length of seven code blocks are obtained, and then each of the plurality of pieces of code fragment information is placed at each of the second cells, which is not particularly limited herein.

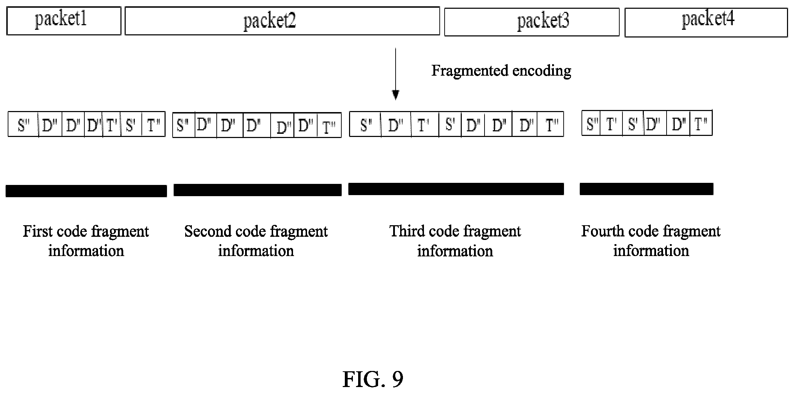

In an embodiment, lengths of at least two neighboring pieces of code fragment information among the plurality of pieces of code fragment information are not equal to a length of the second cell, and a sum of the lengths of the at least two neighboring pieces of code fragment information is equal to an integer multiple of the length of the second cell. As such, at least one pair of a pseudo end code block and a pseudo start code block is reduced, thereby improving the bearer efficiency. In addition, after the plurality of pieces of code fragment information are placed at the second cells, the fragment start code block of each of the plurality of pieces of code fragment information is placed at the start code block of a corresponding second cell, and the fragment end code block of each of the plurality of pieces of code fragment information is placed at the end code block of a corresponding second cell. The fragment start code block and the fragment end code block belong to different code fragment information. For example, assuming that the length of the second cell is seven code blocks, fragmented encoding may be performed on the second service information to obtain a piece of code fragment information having a length of three code blocks, a piece of code fragment information having a length of four code blocks, and a plurality of pieces of code fragment information each having a length of seven code blocks. Alternatively, as shown in FIG. 9, fragmented encoding may be performed on the second service information to obtain a piece of code fragment information having a length of eight code blocks (i.e., third code fragment information), a piece of code fragment information having a length of six code blocks (i.e., fourth code fragment information), and a plurality of code fragment information each having a length of seven code blocks (e.g., first code fragment information, second code fragment information, and fifth code fragment information). Alternatively, fragmented encoding may be performed on the second service information to obtain a piece of code fragment information having a length of two code blocks, a piece of code fragment information having a length of five code blocks, and a plurality of pieces of code fragment information each having a length of seven code blocks, which is not particularly limited herein.

In an embodiment, upon completion of each piece of code fragment information, it is feasible to directly place the code fragment information at a second cell and send the second service information at the second cell, i.e., the second service information at the second cell can be sent during fragmented encoding of other second service information, and it is neither necessary to wait for completion of all the code fragment information and then place all the code fragment information at the corresponding second cells at the same time, nor necessary to place all the code fragment information at the second cells and then send all the second service information at the same time.

In this embodiment, with the service information processing method including the above steps S210 to S220, fragmented encoding may be performed on the second service information to obtain a plurality of pieces of code fragment information, and then the plurality of pieces of code fragment information are placed at second cells. Therefore, in the embodiments of the present disclosure, fragmented encoding may be performed on the customer packet to generate a sequence code block, and then the sequence code block is directly sent at the cell, thereby solving the complexity problem caused by carrying the code block of the customer packet on the cell by the mapping method and the problem of low bearer efficiency of the cell.

In another embodiment not according to the invention and present for illustration purposes only, the second service information may be placed at the second cell, and during the placement of the second service information, the second service information is encoded. Therefore, in this embodiment, the second service information does not need to be fragmented. For example, assuming that the second service information includes a data packet, if the first encoded code block of the data packet is a start code block of the data packet, the start code block of the data packet may be placed at the start code block of the second cell; and if the first encoded code block of the data packet is a data code block of the data packet, the data code block of the data packet may be placed at the data code block of the second cell, and a pseudo start code block may be placed at the start code block of the second cell, which is not particularly limited in this embodiment.

Based on the above embodiment not according to the invention and present for illustration purposes only, in placing the second service information at the second cell, when a cell stream includes at least two neighboring second cells, the at least two neighboring second cells are determined as a target cell, and the second service information is placed at the target cell. In some embodiments, a pseudo start code block or a true start code block is placed at a start code block of each of the second cells in the target cell, a pseudo end code block or a true end code block is placed at an end code block of each of the second cells, and the second service information is placed between the start code block and the end code block of each of the second cells. The true start code block indicates that the start code block is the start code block of the data packet, not a start code block of the second cell. The true end code block indicates that the end code block is the end code block of the data packet, not an end code block of the second cell. The pseudo start code block indicates that the start code block is a start code block of the second cell, not a start code block of the data packet. The pseudo end code block indicates that the end code block is an end code block of the second cell, not an end code block of the data packet.

In an embodiment, the true start code block is placed at a start code block of a 1st second cell in the target cell; the pseudo start code block is placed at a start code block of a cell other than the 1st second cell in the target cell; the true end code block is placed at an end code block of a last second cell in the target cell; the pseudo end code block is placed at an end code block of a cell other than the last second cell in the target cell, which is not particularly limited herein.

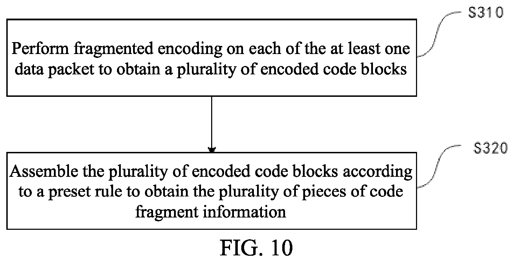

In an embodiment, as shown in FIG. 10, when the second service information includes at least one data packet, S210 is further described, and S210 includes the following steps S310 and S320.

At S310, fragmented encoding is performed on each of the at least one data packet to obtain a plurality of encoded code blocks.

In an embodiment, 64B/66B encoding may be performed on each data packet. During 64B/66B encoding of the data packet, a preamble and frame gap part of the data packet may be encoded as a start code block, a data part in the middle of the data packet may be encoded as a data code block, and the remaining part after the data part of the data packet may be encoded as an end code block. Therefore, encoded code blocks of a data packet may include a start code block, a data code block and an end code block, which is not particularly limited herein.

At S320, the plurality of encoded code blocks are assembled according to a preset rule to obtain the plurality of pieces of code fragment information.

In an embodiment, the preset rule may include at least one of that: one piece of code fragment information includes the encoded code blocks of one data packet; one piece of code fragment information includes the encoded code blocks of a plurality of data packet; one piece of code fragment information includes a target code block assembly block and the encoded code blocks of the at least one data packet; and one piece of code fragment information includes a target code block assembly block, which is not particularly limited herein.

In an embodiment, in an example where the preset rule includes that one piece of code fragment information includes the encoded code blocks of a plurality of data packet and one piece of code fragment information includes the encoded code blocks of one data packet, when a sum of lengths of the plurality of encoded code blocks corresponding to a target data packet is less than the length of the code fragment information, the plurality of encoded code blocks of the target data packet and encoded code blocks of a data packet neighboring to the target data packet are assembled into one piece of code fragment information, where the code fragment information includes a start code block of the target data packet and an end code block of the neighboring data packet, or includes an end code block of the target data packet and a start code block of the neighboring data packet; and when the sum of the lengths of the plurality of encoded code blocks corresponding to the target data packet is greater than the length of the code fragment information, a plurality of encoded code blocks of the data packet may be assembled into one piece of code fragment information, which is not particularly limited herein.

In some embodiments, as shown in FIG. 8, it is assumed that the length of each of the plurality of pieces of code fragment information is seven code blocks, and the second service information includes four data packets, namely, packet1, packet2, packet3, and packet4. Five encoded code blocks are obtained through fragmented encoding of packet1. The first encoded code block is both a start code block S' of packet1 and a fragment start code block S" of the first piece of code fragment information. The fifth encoded code block is an end code block of packet1. In addition, packet1 is a target data packet, packet2 is a neighboring data packet, and the start code block S' of packet1 is a start code block S' of the target data packet. Because a sum of lengths of the five encoded code blocks of packet1 is less than the length of the code fragment information, fragmented encoding continues to be performed on packet2 to obtain a start code block S' of packet2, and then fragmented encoding is performed on packet2 to obtain the seventh encoded code block, which may be used as a fragment end code block T". Finally, the obtained seven encoded code blocks are assembled to obtain the first piece of code fragment information. It can be understood that the first piece of code fragment information carries not only the start code block S' and the end code block T' of packet1, but also the start code block S' of packet2.

The first piece of code fragment information obtained may be directly placed at the corresponding second cell. The fragment start code block of the code fragment information is placed at the start code block of the second cell, the fragment end code block of the code fragment information is placed at the end code block of the second cell, and the second service information at the second cell is sent. Immediately afterwards, the second piece of code fragment information continues to be assembled. First, fragmented encoding is performed on the remaining part of packet2 to obtain an encoded code block, which is used as a fragment start code block S" of the second piece of code fragment information (where the encoded code block is not the start code block S' of packet2). Then, fragmented encoding is performed on packet2 to obtain five encoded code blocks in sequence. The five encoded code blocks are used as a fragment data code block D". Then, fragmented encoding is performed on packet2 to obtain the seventh encoded code block, which may be used as a fragment end code block T". Finally, the obtained seven encoded code blocks are assembled to obtain the second piece of code fragment information.

Similarly, the second piece of code fragment information obtained may be directly placed at the corresponding second cell. The fragment start code block of the code fragment information is placed at the start code block of the second cell, the fragment end code block of the code fragment information is placed at the end code block of the second cell, and the second service information at the second cell is sent. Then, the third piece of code fragment information continues to be assembled. Because the fragmented encoding of packet2 has not been completed, the fragmented encoding continues to be performed on packet2 to obtain an encoded code block, which is used as a fragment start code block S" of the third piece of code fragment information (where the encoded code block is not the start code block S' of packet2). Then, fragmented encoding is performed on packet2 to obtain an end code block, which is an T" end code block of packet2, not a fragment end code block T" of the third piece of code fragment information. Thus, the fragmented encoding of packet2 is completed. In this case, because a sum of lengths of the two encoded code blocks obtained by fragmented encoding is less than the length of the third piece of code fragment information, it is necessary to perform fragmented encoding on packet3. First, fragmented encoding is performed on packet3 to obtain the first encoded code block, which is a start code block S' of packet3, not the fragment start code block S" of the third piece of code fragment information. Then, fragmented encoding is performed on packet3 to obtain three encoded code blocks in sequence, all of which are used as a fragment data code block D" of the third piece of code fragment information. Finally, fragmented encoding is performed on packet3 to obtain the seventh encoded code block, which may be used as the fragment end code block T" of the third code fragment information (where the T block is not an end code block T' of packet3). Finally, the obtained seven encoded code blocks are assembled to obtain the third piece of code fragment information.

Similarly, the third piece of code fragment information obtained may be directly placed at the corresponding second cell. The fragment start code block of the code fragment information is placed at the start code block of the second cell, the fragment end code block of the code fragment information is placed at the end code block of the second cell, and the second service information at the second cell is sent. Because the fragmented encoding of packet3 has not been completed after the third piece of code fragment information is obtained by assembling, the fragmented encoding continues to be performed on packet3 to obtain an encoded code block, which is used as a fragment start code block S" of the fourth piece of code fragment information, not the start code block of packet3. Then, fragmented encoding is performed on packet3 to obtain the last encoded code block, which is the end code block T' of packet3, not a fragment end code block T" of the fourth piece of code fragment information. Thus, the fragmented encoding of packet3 is completed. In this case, because a sum of lengths of the two encoded code blocks obtained by fragmented encoding is less than the length of the fourth piece of code fragment information, it is necessary to perform fragmented encoding on packet4. The fourth piece of code fragment information may be obtained in a similar manner, which will not be repeated herein.

In an embodiment, the fragment end code blocks T" of all the code fragment information in the above embodiment may each have 0 bytes, 1 byte, 2 bytes, 6 bytes, 7 bytes, etc. When T" has 0 bytes, T" is T₀, and T₀ does not carry any content of the data packet. When T" has 1 byte, T" is T₁; ...; when T" has 6 bytes, T" is T₆; when T" has 7 bytes, T" is T₇, which is not particularly limited herein. In addition, once a piece of code fragment information is obtained, the piece of code fragment information may be directly placed at the corresponding second cell. The fragment start code block of the code fragment information is placed at the start code block of the second cell, the fragment end code block of the code fragment information is placed at the end code block of the second cell, and the second service information at the second cell is sent. It is neither necessary to wait for completion of all the code fragment information and then place all the code fragment information at the corresponding second cells at the same time, nor necessary to place all the code fragment information at the second cells and then send all the second service information at the second cells at the same time.

In an embodiment, when the code fragment information is placed at the second cell, a start code block of a target data packet or a pseudo start code block may be placed at the start code block of the second cell, and an end code block of the target data packet or a pseudo end code block may be placed at the end code block of the second cell, which is not particularly limited herein.

In an embodiment, it is assumed that a length of target code fragment information is seven code blocks, and the second service information includes one data packet, namely, packet1. Five encoded code blocks are obtained through fragmented encoding of packet1. The first encoded code block is a start code block S' of packet1, and the fifth encoded code block is an end code block T' of packet1. In this case, a pseudo start code block may be used as the fragment start code block S" and a pseudo end code block may be used as the fragment end code block T". The pseudo start code block, the five encoded code blocks obtained by fragmented encoding of packet 1, and the pseudo end code block are assembled in sequence to obtain code fragment information. Alternatively, it is assumed that a length of target code fragment information is seven code blocks, and the second service information includes one data packet, namely, packet1. Six encoded code blocks are obtained through fragmented encoding of packet1. The first encoded code block is a start code block S' of packet1, and the fifth encoded code block is an end code block T' of packet1. In this case, a pseudo start code block may be used as the fragment start code block S" and the end code block T' of packet1 may be placed at a fragment end code block T". The pseudo start code block and the six encoded code blocks obtained by fragmented encoding of packet1 are assembled in sequence to obtain code fragment information, which is not particularly limited herein.

In an embodiment, among at least two neighboring pieces of code fragment information, no fragment end code block is set in a former piece of code fragment information, and no fragment start code block is set in a latter piece of code fragment information.

In an embodiment, it is assumed that a length of first code fragment information and a length of second code fragment information are each seven code blocks, and the second service information includes two data packets, namely, packet1 and packet2. 9 encoded code blocks are obtained through fragmented encoding of packet1, where the first encoded code block is a start code block S' of packet1, and the ninth encoded code block is an end code block T' of packet1. Five encoded code blocks are obtained through fragmented encoding of packet2, where the first encoded code block is a start code block S' of packet2, and the ninth encoded code block is an end code block T' of packet2. The first seven encoded code blocks of packet1 are assembled in sequence to obtain the first code fragment information, where the seventh code block is a data code block of packet1, so the first code fragment information does not include a fragment end code block T". The last two encoded code blocks of packet1 and the five encoded code blocks of packet2 constitute the second code fragment information. In this way, the start code block S' of packet1 is carried by the fragment start code block S" of the first code fragment information, the seventh encoded code block of packet1 is placed at the last code block of the first code fragment information, the eighth encoded code block of packet1 is placed at the first code block of the second code fragment information, and the end code block T' of packet1 is carried by the second code block of the second code fragment information, so the second code fragment information does not have a fragment start code block S". Similarly, the start code block S' of packet2 is placed at the third code block of the second code fragment information, ..., and the end code block T' of packet2 is placed at the last code block of the second code fragment information, so the second code fragment information does not have a fragment end code block T", which is not particularly limited herein.

Based on the above embodiment, in a scenario in which the second cell is sent while fragmented encoding is being performed on the second service information, starting from the first code fragment information, the fragment start code block S" of the first code fragment information is placed at the start code block S‴ of the 1st second cell in the cell. Because the first code fragment information does not have a fragment end code block T", the second cell does not have an end code block T‴ when the first code fragment information is placed at the second cell. Immediately afterwards, fragmented encoding continues to be performed on packet1 and packet2 of the second service information to obtain seven encoded code blocks, and the seven encoded code blocks are assembled into the second code fragment information, so that the second code fragment information does not have a fragment start code block S". Then, the second code fragment information is placed at the next second cell, so that the first code block of the next second cell does not carry the start code block of the cell S"'. Therefore, with the method in this embodiment, neighboring second cells are used as one target cell, the first code block of the former cell (i.e., the first code block of the target cell) must be the start code block S‴ of the cell, the last code block in the latter cell (i.e., the last code block of the target cell) must be the end code block T‴ of the cell, and among the neighboring cells, the last code block in the former cell does not carry the end code block T‴ of the cell, and the first code block in the latter cell does not carry the start code block S‴ of the cell.

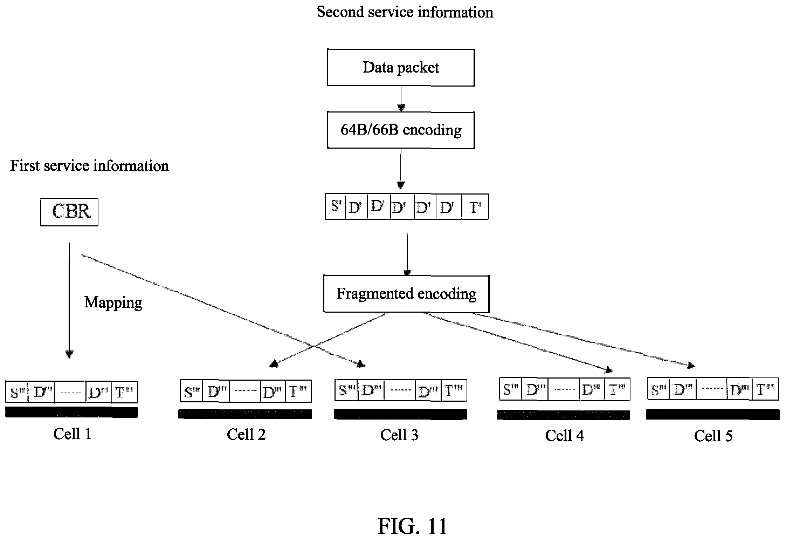

In an embodiment, as shown in FIG. 11 and FIG. 8, it is assumed that the first service information is high-QoS service information, and the second service information is ordinary Ethernet service information. The high-QoS service information is mapped to three first cells, fragmented encoding is performed on the ordinary Ethernet service information to obtain three pieces of code fragment information, and then the three pieces of code fragment information are placed at three second cells. A first cell exists between the 1st second cell (i.e., cell 2) and the 2nd second cell (i.e., cell 4), and the 2nd second cell (i.e., cell 4) is neighboring to the 3rd second cell (i.e., cell 5). It can be learned that code fragment information carried by the 2nd second cell (i.e., the second code fragment information) is neighboring to code fragment information carried by the 3rd second cell (i.e., the third code fragment information). Therefore, a fragment end code block of the second code fragment information is neighboring to a fragment start code block of the third code fragment information (or, an end code block of the 2nd second cell is neighboring to a start code block of the 3rd second cell). In addition, the fragment end code block of the second code fragment information is not the end code block of the data packet packet2, and the fragment start code block of the third code fragment information is not the start code block of the data packet packet2. In other words, neither the fragment end code block of the second code fragment information nor the fragment start code block of the third code fragment information carries ordinary Ethernet service information. Consequently, the bearer efficiency is reduced. Based on this, when the sum of the lengths of the plurality of encoded code blocks corresponding to the target data packet is greater than the length of the code fragment information, a fragment start code block and a fragment end code block between at least two neighboring pieces of target code fragment information may be removed to improve the bearer efficiency, and make it convenient for the receive end to recover the second service information.

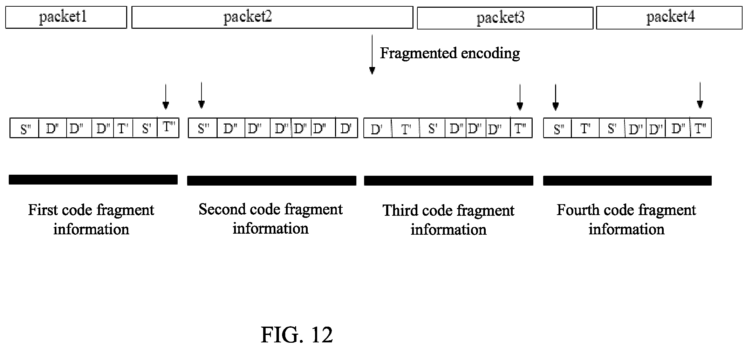

Based on the above embodiment, as shown in FIG. 12, one data code block D' of the data packet packet2 is placed at the last code block of the second code fragment information, and another data code block D' of the data packet packet2 is placed at the first code block of the third code fragment information. Because both the fragment end code block of the second code fragment information nor the fragment start code block of the third code fragment information carry ordinary Ethernet service information, the bearer efficiency is improved in this embodiment. In addition, when receiving the 2nd second cell corresponding to the second code fragment information and the 3rd second cell corresponding to the third code fragment information, the receive end neither needs to determine whether the end code block of the 2nd second cell is a pseudo end code block, nor needs to determine whether the start code block of the 3rd second cell is a pseudo start code block. As such, the recovery of ordinary Ethernet service information by the receive end is accelerated.

In an embodiment, in an example where the preset rule includes that one piece of code fragment information includes a target code block assembly block and the encoded code blocks of the at least one data packet, the target code block assembly block includes at least one of an idle code block, a pseudo start code block, or a pseudo end code block. When the sum of the lengths of the plurality of encoded code blocks corresponding to the target data packet is greater than the length of the code fragment information, or when the sum of the lengths of the plurality of encoded code blocks corresponding to the target data packet is less than the length of the code fragment information, the plurality of encoded code blocks of the target data packet and a target code block assembly block are assembled into one piece of code fragment information. The target code block assembly block may be at least one of an idle code block, a pseudo start code block, or a pseudo end code block. For example, the target code fragment information may use a pseudo start code block as a fragment start code block and use an end code block of the target data packet as a fragment end code block; or, the target code fragment information may use a start code block of the target data packet as a fragment start code block and use a pseudo end code block as a fragment end code block; or, the target code fragment information may use a pseudo start code block as a fragment start code block and use a pseudo end code block as a fragment end code block; or, the target code fragment information may use an idle code block as a fragment start code block and use an end code block of the target data packet as a fragment end code block, which is not particularly limited herein. It can be understood that the idle code block is a control code block obtained through 64B/66B encoding of ordinary Ethernet service information, and the idle code block may also be referred to as an idle block, an I code block or an I block.

In an embodiment, when the length of each of the encoded code blocks obtained through fragmented encoding of the target data packet is less than the length of the code fragment information by one code block, a pseudo end code block is used as the fragment end code block T" of the code fragment information, and the encoded code blocks obtained through fragmented encoding of the target data packet and the pseudo end code block are assembled into one piece of code fragment information.

In another embodiment, when the length of each of the encoded code blocks obtained through fragmented encoding of the target data packet is less than the length of the code fragment information, an idle code block and the encoded code blocks obtained through fragmented encoding may be assembled into one piece of code fragment information, to ensure that each piece of code fragment information has a fixed length. The idle code block may be carried at any location in the code fragment information, for example, may be carried by the fragment start code block S" of the code fragment information, may be carried by a code block between the fragment start code block and the fragment end code block, or may be carried by the fragment end code block T" of the code fragment information.

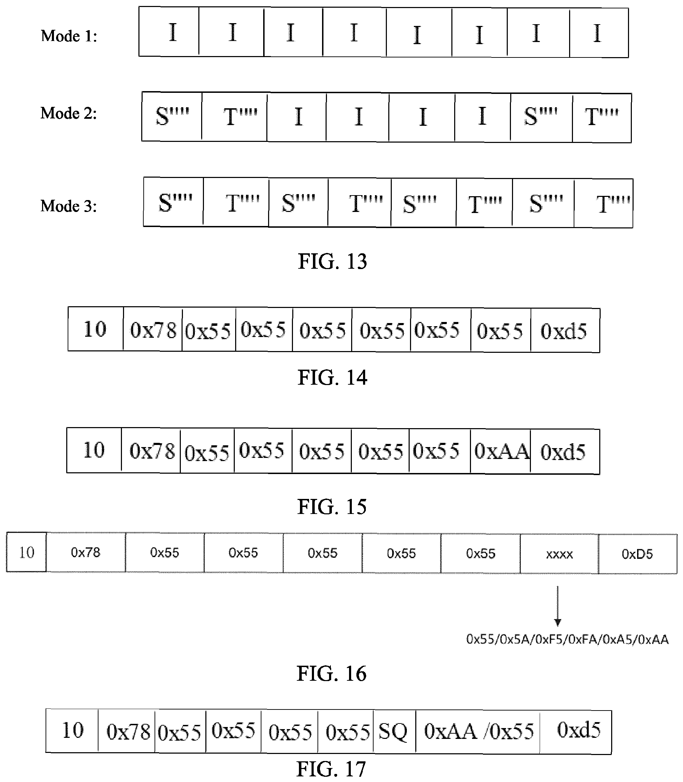

In another embodiment, in an example where the preset rule includes that one piece of code fragment information includes a target code block assembly block, the target code block assembly block includes at least one of an idle code block, a pseudo start code block, or a pseudo end code block. As shown by Mode 1 in FIG. 13, when there is no target data packet, a plurality of idle code blocks I may be directly assembled into code fragment information. Alternatively, as shown by Mode 2 in FIG. 13, a pseudo start code block Sʺʺ and a pseudo end code block Tʺʺ may be directly padded in sequence in the first two code blocks of the code fragment information, idle code blocks I are carried by code blocks in the middle of the code fragment information, and a pseudo start code block Sʺʺ and a pseudo end code block Tʺʺ are padded in sequence in the last two code blocks of the code fragment information. Alternatively, as shown by Mode 3 in FIG. 13, a pseudo start code block Sʺʺ and a pseudo end code block Tʺʺ may be alternately padded in code blocks of the code fragment information.

In this embodiment, with the service information processing method including the above steps S310 to S320, when the second service information includes at least one data packet, fragmented encoding may be performed on each of the at least one data packet to obtain a plurality of encoded code blocks, and then the plurality of encoded code blocks may be assembled according to a preset rule to obtain the plurality of pieces of code fragment information. Therefore, in the embodiments of the present disclosure, the length of the code fragment information assembled from the encoded code blocks obtained through fragment encoding of the data packet(s) matches the length of the second cell by a preset rule, such that the code fragment information can be directly placed at the second cell in subsequent steps.

In an embodiment, the code fragment information includes a fragment end code block and a fragment start code block. The fragment end code block may be a true end code block or a pseudo end code block. The true end code block is an end code block of a data packet in the second service information. The pseudo end code block is not an end code block of a data packet in the second service information. The fragment start code block may be a true start code block or a pseudo start code block. The true start code block is a start code block of a data packet in the second service information. The pseudo start code block is not a start code block of a data packet in the second service information. As shown in FIG. 8, a fragment start code block S" that an arrow points to is a pseudo start code block, and a fragment end code block T" that an arrow points to is a pseudo end code block.

It can be understood that a pseudo end code block of one piece of code fragment information and a pseudo start code block of the next piece of code fragment information appear in a pair. If a fragment end code block of one piece of code fragment information is a pseudo end code block, it means that the second service information is truncated by the pseudo end code block, and a fragment start code block of a next piece of code fragment information must be a pseudo start code block. By reverse inference, if a fragment start code block of one piece of code fragment information is a pseudo start code block, it means that the second service information is truncated, a fragment end code block of a previous piece of code fragment information must be a pseudo end code block, and the previous piece of code fragment information carries a part of the second service information. Therefore, once it is identified whether the current fragment start code block is a pseudo start code block, it can be determined by inverse inference whether the previous fragment end code block is a pseudo end code block, and there is no need to mark whether the fragment end code block is a pseudo end code block.

In addition, when the second service information is ordinary Ethernet service information, the start code block of the ordinary Ethernet service information (i.e., the start code block S' of the data packet) is generally in a fixed format during fragmented encoding of the ordinary Ethernet service information, as shown in FIG. 14. In FIG. 14, a bit value of a synchronization header of the start code block is "10", and the content of the first byte immediately following the synchronization header is "0x78", which is the type of the control block, followed by "0x55" of 6 bytes and "0xd5" of 1 byte. Among them, the 6-byte "0x55" represents a frame interval of an Ethernet packet, and the 1-byte "0xd5" represents a frame delimiter of the Ethernet packet. Since the frame interval and the frame delimiter are fixed contents in an encoded code block of ordinary Ethernet service information, the appearance of "0x55" of 6 bytes and "0xd5" of 1 byte in an encoded code block indicates that the service information is a start code block of ordinary Ethernet service information (i.e., a start code block S' of a data packet).

In view of the above, in an embodiment, a start code block of each of the at least one data packet carries a packet code block type flag value, and the packet code block type flag value is used to determine a type of a start code block of a current data packet, a type of an end code block of a previous data packet, and a type of an end code block after the start code block of the current data packet, which is not particularly limited herein.

In an embodiment, taking the packet code block type flag value as an example, when the packet code block type flag value is a first preset value, the packet code block type flag value represents that the current start code block is a true start code block, and represents that the end code block after the current start code block is a true end code block, where the true start code block indicates that the start code block is the start code block of the data packet, not a start code block of the second cell, and the true end code block indicates that the end code block is the end code block of the data packet, not an end code block of the second cell. For example, as shown in FIG. 16, the first preset value is represented by xxxx, and it is assumed that the first preset value is located at the seventh byte after the synchronization header in the start code block. When the first preset value xxxx is 0x55, it indicates that the current start code block is a true start code block, and an end code block after the current start code block is a true end code block. In addition, the first preset value may also be located in other bytes or may be set to other values, which is not particularly limited herein.

In another embodiment, when the packet code block type flag value is a second preset value, the packet code block type flag value represents that the current start code block is a true start code block, and represents that the end code block after the current start code block is both the end code block of the data packet and an end code block of the second cell, where the true start code block indicates that the start code block is the start code block of the data packet, not a start code block of the second cell, and the pseudo end code block indicates that the end code block is an end code block of the second cell, not an end code block of the data packet. For example, as shown in FIG. 16, the second preset value is represented by xxxx, and it is assumed that the second preset value is located at the seventh byte after the synchronization header in the start code block. When the second preset value xxxx is 0x5A, it indicates that the current start code block is a true start code block, and the end code block after the current start code block is both the end code block of the data packet and an end code block of the second cell. In addition, the second preset value may also be located in other bytes or may be set to other values, which is not particularly limited herein.

In an embodiment, a fragment start code block of the code fragment information carries a fragment code block type flag value, and the fragment code block type flag value is used to determine a type of a start code block of a current code fragment information, a type of an end code block of a previous code fragment information, and a type of an end code block after the start code block of the current code fragment information. The type of the start code block of the current code fragment information may be a fragment start code block, a start code block of a data packet, or both a fragment start code block and a start code block of a data packet. In addition, the fragment code block type flag value may also be used to determine the type of the last end code block of the current code fragment information. The type of the last end code block of the current code fragment information may be a fragment end code block, an end code block of a data packet, or both a fragment end code block and an end code block of a data packet, which is not particularly limited herein. For example, when it is determined that the type of the last end code block of the current code fragment information is a fragment end code block, not a start code block of a data packet, it can be determined that the type of the end code block of the previous code fragment information is a fragment end code block, not an end code block of a data packet. The fragment code block type flag value may be set in any byte from the second byte to the eighth byte after the synchronization header in the start code block. The fragment code block type flag value may be any value other than 0x55 and 0xd5. For example, it is assumed that when the fragment code block type flag value is "0xAA", it indicates that the current start code block is a pseudo start code block, i.e., it indicates that the start code block is a fragment start code block, not a start code block of a data packet (i.e., a true start code block of a packet), and a previous end code block before the start code block (i.e., the type of the end code block of the previous code fragment information) is a pseudo end code block. The pseudo end code block indicates that the end code block of the previous code fragment information is a fragment end code block, not an end code block of a data packet.

In an embodiment, as shown in FIG. 15, when the code fragment information uses a pseudo start code block as a start code block, i.e., the start code block is not a start code block of a data packet, but a fragment start code block, the fragment code block type flag value may be set to "0xAA" and placed in the seventh byte after the synchronization header of the fragment start code block to generate a fragment start code block, to identify that the fragment start code block is a pseudo start code block. When a second cell carrying the code fragment information is received, it can be determined according to the fragment code block type flag value of the fragment start code block corresponding to the start code block of the second cell that the fragment start code block is not a start code block of a data packet. Alternatively, the fragment code block type flag value may be set to "0xFF" and placed in the eighth byte after the synchronization header of the fragment start code block to generate a fragment start code block, to identify that the fragment start code block is a pseudo start code block, which is not particularly limited herein.

In an embodiment, a start code block of the second cell carries a cell code block type flag value, and the cell code block type flag value is used to determine a type of a start code block of a current second cell, a type of an end code block of a previous second cell, and a type of an end code block after the start code block of the current second cell.

In another embodiment, taking the cell code block type flag value as an example, when the cell code block type flag value is a third preset value, the cell code block type flag value represents that the start code block of the current second cell is both a start code block of the data packet and the start code block of the second cell, and represents that the end code block after the start code block of the current second cell is a true end code block, where the true end code block indicates that the end code block is an end code block of the data packet, not an end code block of the second cell. For example, as shown in FIG. 16, the third preset value is represented by xxxx, and it is assumed that the third preset value is located in the seventh byte after the synchronization header in the start code block of the second cell. When the third preset value is 0xF5, it indicates that the start code block of the current second cell is not only a start code block of the second cell, but also a start code block of a data packet (i.e., a start code block of a customer packet), and an end code block after the start code block of the current second cell is a true end code block, i.e., the end code block is an end code block of a data packet (i.e., an end code block of the customer packet), not an end code block of the second cell. In addition, the third preset value may also be located in other bytes or may be set to other values, which is not particularly limited herein.

In another embodiment, when the cell code block type flag value is a fourth preset value, the cell code block type flag value represents that the start code block of the current second cell is both a start code block of the data packet and the start code block of the second cell, and represents that the end code block after the start code block of the current second cell is a pseudo end code block, where the pseudo end code block indicates that the end code block is an end code block of the second cell, not an end code block of the data packet. For example, as shown in FIG. 16, the fourth preset value is represented by xxxx, and it is assumed that the fourth preset value is located in the seventh byte after the synchronization header in the start code block of the second cell. When the fourth preset value is 0xFA, it indicates that the start code block of the current second cell is not only a start code block of a second cell, but also a start code block of a data packet (i.e., a start code block of a customer packet), and an end code block after the start code block of the current second cell is a pseudo end code block. In addition, the fourth preset value may also be located in other bytes or may be set to other values, which is not particularly limited herein.

In another embodiment, when the cell code block type flag value is a fifth preset value, the cell code block type flag value represents that the start code block of the current second cell is a pseudo start code block, and represents that the end code block after the start code block of the current second cell is a true end code block, where the pseudo start code block indicates that the start code block is a start code block of the second cell, not a start code block of the data packet, and the true end code block indicates that the end code block is an end code block of the data packet, not an end code block of the second cell. For example, as shown in FIG. 16, the fifth preset value is represented by xxxx, and it is assumed that the fifth preset value is located in the seventh byte after the synchronization header in the start code block of the second cell. When the fifth preset value is 0xA5, it indicates that the current encoded code block is a start code block of the second cell, not a start code block of a data packet (i.e., not a start code block of a customer packet), and an end code block after the start code block of the current second cell is a true end code block. In addition, the fifth preset value may also be located in other bytes or may be set to other values, which is not particularly limited herein.

In another embodiment, when the cell code block type flag value is a sixth preset value, the cell code block type flag value represents that the start code block of the current second cell is a pseudo start code block, and represents that the end code block after the start code block of the current second cell is a pseudo end code block, where the pseudo start code block indicates that the start code block is a start code block of the second cell, not a start code block of the data packet, and the pseudo end code block indicates that the end code block is an end code block of the second cell, not an end code block of the data packet. For example, as shown in FIG. 16, the sixth preset value is represented by xxxx, and it is assumed that the sixth preset value is located in the seventh byte after the synchronization header in the start code block of the second cell. When the sixth preset value is 0xAA, it indicates that the start code block of the current second cell is only a start code block of the second cell, not a start code block of a customer packet, and an end code block after the start code block is only an end code block of the second cell, not an end code block of a data packet (i.e., not an end code block of the customer packet). In addition, the sixth preset value may also be located in other bytes or may be set to other values, which is not particularly limited herein.

It can be understood that the fragment code block type flag value may be set to various values, which may have the same meanings as those indicated by the cell code block type flag value in the above embodiments, so the details will not be repeated herein. Similarly, the packet code block type flag value may be set to various values, which may have the same meanings as those indicated by the cell code block type flag value in the above embodiments, so the details will not be repeated herein.

In an embodiment, because a pseudo end code block of one second cell and a pseudo start code block of a next second cell appear in a pair, a fragment sequence number may be carried in the start code block of the second cell corresponding to each of the plurality of pieces of code fragment information to determine whether the current second cell is the second cell where the last piece of code fragment information is placed. When the current second cell is not the second cell where the last code fragment information is placed, it can be determined that the end code block of the second cell where the code fragment information is placed must be a pseudo end code. When the code fragment information where the current second cell is placed is the last piece of code fragment information, it can be determined that the first end code block immediately after the start code block of the second cell where the code fragment information is placed must be a true end code. For example, as shown in FIG. 17, a fragment sequence number SQ is carried in the sixth byte after the synchronization header of the start code block of the second cell, and fragment sequence numbers SQ corresponding to the consecutive pieces of code fragment information may be set in a descending order of fragment sequence numbers, i.e., the fragment sequence numbers SQ corresponding to the consecutive pieces of code fragment information may be X, X-1, X-2, ..., 2, 1, 0 in sequence, where X is a natural number, which is not particularly limited herein.

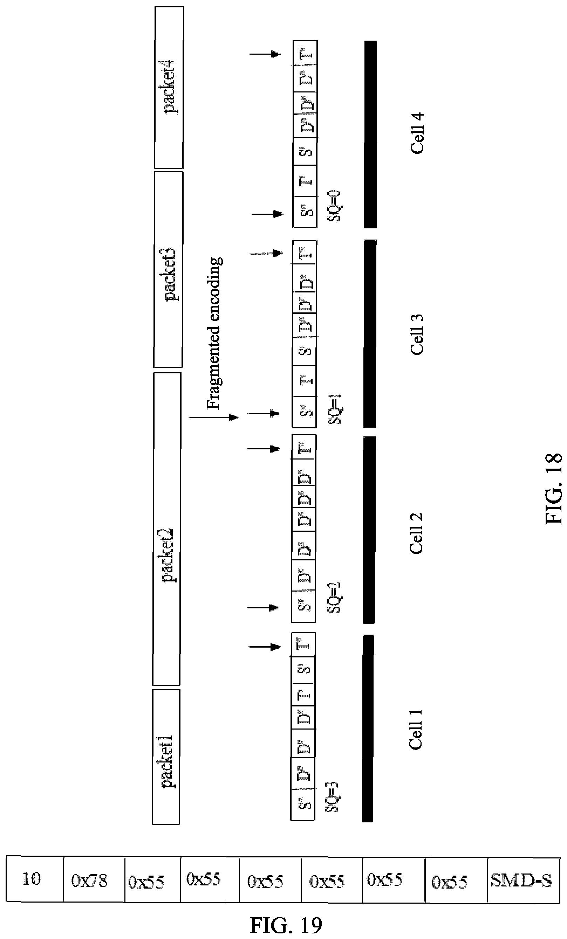

In an embodiment, as shown in FIG. 18, fragmented encoding is performed on a data packet packet2 to obtain four pieces of code fragment information, the four pieces of code fragment information are placed at a corresponding second cell, and then second service information (such as customer service) at the second cell is sent. A fragment start code block of each of the four pieces of code fragment information carries a fragment sequence number SQ, and the fragment sequence numbers SQ corresponding to the four pieces of code fragment information are respectively 3, 2, 1, and 0. The code fragment information having the fragment sequence number SQ of 2 and the code fragment information having the fragment sequence number SQ of 1 correspond to encoded code blocks in the middle of the data packet packet2. Therefore, it can be determined that fragment end code blocks in the code fragment information having the fragment sequence numbers SQ of 2 and 1 are each a pseudo end code block. Because the code fragment information having the fragment sequence number SQ of 1 is the last piece of code fragment information corresponding to packet2, it can be determined that the first end code block immediately following the fragment start code block in the code fragment information is a true end code block, i.e., an end code block T' of the data packet packet2.

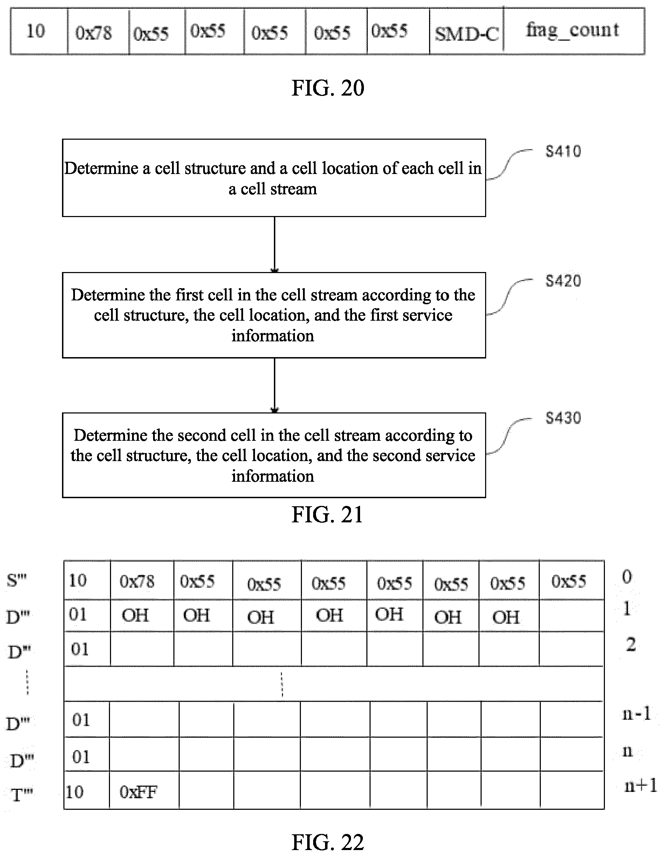

It should be noted that it is defined in the Ethernet 802.3br standard that when packets of different priorities are sent at the same time, a transmission of a packet of a lower priority is interrupted for a transmission of a packet of a higher priority. For example, assuming that the priority of the second service information is lower than the priority of the first service information, if the first service information needs to be sent while the second service information is being sent, the sending of the second service information will be interrupted or stopped, and the first service information will be sent preferentially or sent by jumping the queue. The 802.3br standard provides an indication mode for each piece of code fragment information interrupted from being sent in the second service information, as shown in FIG. 19 and FIG. 20. In FIG. 19, for the first piece of code fragment information interrupted from being sent, the content of the eighth byte in the fragment start code block of the code fragment information may be set to SMD-S. SMD-S may be any one of SMD-S0, SMD-S1, SMD-S2, or SMD-S3. SMD-S0, SMD-S1, SMD-S2, and SMD-S3 respectively correspond to different values, as shown in Table 1. In FIG. 20, for other code fragment information after the first piece of code fragment information, the content of the seventh byte in the fragment start code block of the code fragment information may be set to SMD-C. SMD-C may be any one of SMD-C0, SMD-C1, SMD-C2, or SMD-C3. SMD-C0, SMD-C1, SMD-C2, and SMD-C3 respectively correspond to different values, as shown in Table 1. In addition, the SMD-S of the first piece of code fragment information needs to correspond to SMD-C of other code fragment information after the first piece of code fragment information. When the fragment start code block of the first piece of code fragment information is set to SMD-S0, the fragment start code block of the subsequent other code fragment information needs to be set to SMD-C0. When the fragment start code block of the first piece of code fragment information is set to SMD-S1, the fragment start code block of the subsequent other code fragment information needs to be set to SMD-C1. When the fragment start code block of the first piece of code fragment information is set to SMD-S2, the fragment start code block of the subsequent other code fragment information needs to be set to SMD-C2. When the fragment start code block of the first piece of code fragment information is set to SMD-S3, the fragment start code block of the subsequent other code fragment information needs to be set to SMD-C3.

**Table 1**

| Field name | Field content |
|---|---|
| SMD-S0 | 0xE6 |
| SMD-S1 | 0x4C |
| SMD-S2 | 0x7F |
| SMD-S3 | 0xB3 |
| SMD-C0 | 0x61 |
| SMD-C1 | 0x52 |
| SMD-C2 | 0x9E |
| SMD-C3 | 0x2A |

**Table 2**

| Fragment sequence number | Field contents of frag_count field |
|---|---|
| 1 | 0xE6 |
| 2 | 0x4C |
| 3 | 0x7F |
| 4 | 0xB3 |

In addition, a field frag_count corresponding to the eighth byte in the fragment start code block of the other code fragment information after the first piece of code fragment information may represent the order of the subsequent code fragment information, so as to facilitate out-of-order detection. In some embodiments, as shown in Table 2, in addition to the first code fragment information, frag_count in the fragment start code blocks of the subsequent first to fourth pieces of code fragment information are 0xE6, 0x4C, 0x7F, and 0xB3 in sequence. Immediately afterwards, and frag_count in the fragment start code blocks of the subsequent fifth to eighth pieces of code fragment information are 0xE6, 0x4C, 0x7F, and 0xB3 in sequence. The rest can be deducted by analogy, and the details will not be repeated herein.

Based on the above analysis, in an embodiment, because fragmented encoding is not performed on a plurality of pieces of second service information, it is feasible to carry one group of SMD-S and SMD-C in the fragmented start code blocks of the code fragment information interrupted from being sent, for example, carry SMD-S0 in the fragment start code block of the first code fragment information, and carry SMD-C0 in the fragment start code block of subsequent other code fragment information. SMD-S0 indicates that the fragment start code block of the first piece of code fragment information is a true start code block, and the first end code block after the fragment start code block is a pseudo end code block, and SMD-C0 indicates that the fragment start code block of subsequent other code fragment information is a pseudo start code block, which is not particularly limited herein.

In another embodiment, a true end code block or a pseudo end code block may be defined according to the 802.3br standard. For example, if a Cyclic Redundancy Check (CRC) value of the second service information carried in the code fragment information is correct, the fragment end code block of the code fragment information is a true end code block; or, if a reassembly CRC (mCRC) value of the second service information carried in the code fragment information is correct, the fragment end code block of the code fragment information is a pseudo end code block, which is not particularly limited herein.

It should be noted that in the above example, when the second service information is carried at the second cell, fragmented encoding is performed on the second service information (such as a customer packet), and then each of the plurality of pieces of code fragment information is placed at the second cell. The fragmentation process is merely an intermediate process during the placement of the second service information at the second cell. The fragmentation of the second service information may be omitted in some implementations.

For example, a process of placing a customer packet at a second cell is: extracting bytes of the customer packet, and according to an order and a rule, encoding the bytes of the customer packet and placing the encoded bytes at the second cell. The rule is as follows.

First, if a byte content of the customer packet to be placed at the first code block of the second cell is a start flag (preamble and frame delimiter byte) of the customer packet, the content of the customer packet is encoded to obtain a start code block of the packet. In this case, the start code block corresponding to the start flag of the customer packet may be placed at the first code block of the second cell, and at the same time, a cell code block type flag value is carried in the start code block, to indicate that the start code block is the start code block of the second cell and also the start code block of the customer packet. If a byte content of the customer packet to be placed at the first code block of the second cell is not a start flag content of the customer packet (preamble and frame delimiter byte), a pseudo start code block is placed at the first code block of the second cell, and the start code block carries a cell code block type flag value used to indicate that the start code block is a pseudo start code block, i.e., the start code block is only the start code block of the second cell, not the start code block of the customer packet. Then, the byte content of the customer packet is placed in sequence at subsequent locations in the start code block of the second cell. In addition to indicating whether the start code block of the second cell is a true start code block or a pseudo start code block, the cell code block type flag value may also indicate whether an end code block after the start code block of the current second cell is a true end code block or a pseudo end code block.

Second, the content of the customer packet is placed in sequence at locations between the start code block and the end code block of the second cell. The content of the customer packet is encoded to obtain encoded code blocks, and the encoded code blocks are placed.

Finally, if a code block of the customer packet to be placed at the end code block of the second cell, i.e., at the last code block, is a content of the last byte of the customer packet and corresponds to an end code block of code blocks obtained through encoding of the content of the customer packet, the end code block of the code blocks obtained through encoding of the content of the customer packet is placed at the end code block of the second cell. If the content of the customer packet to be placed at the start code block of the second cell is not the content of the last byte of the customer packet, the corresponding encoded code block is not the end code block of the customer packet. In this case, it is necessary to extract a content byte of the customer packet, encode the content byte of the customer packet into a pseudo end code block, and place the pseudo end code block at the end code block of the second cell, to indicate that the end code block of the second cell is not the end code block of the customer packet, i.e., not a true end code block. In addition, whether the end code block is a true end code block or a pseudo end code block may be indicated by a pseudo start code block after the end code block. The pseudo end code block and the pseudo start code block appear in a pair. In other words, when a start code block after an end code block is a pseudo start code block, the preceding end code block is a pseudo end code block; when a start code block after an end code block is a true start code block, the preceding end code block is a true end code block. In addition to the forward indication, backward indication may also be implemented. In practice, the start code block of the former second cell may also carry a cell code block type flag value to indicate whether an end code block after the start code block of the second cell is a true end code block or a pseudo end code block.

In addition, when a cell stream includes at least two neighboring second cells, the at least two neighboring second cells are determined as a target cell; and the customer packet is placed at the target cell, and the end code block of the former second cell and the start code block of the latter second cell are both used to place the customer packet.

It can be understood that in the process of placing the customer packet, if there is no customer packet, a code block such as an idle code block, a pseudo start code block, or a pseudo-end code block may be placed instead of the customer packet.

Through the above placement method, the fragmentation process is not given, but the purpose of placing the customer packet in a fragmented manner is achieved.

In an embodiment, as shown in FIG. 21, the service information processing method may further include the following steps S410, S420, and S430.

At S410, a cell structure and a cell location of each cell in a cell stream are determined.

In an embodiment, the cell location of each cell in the cell stream remains unchanged during transmission of the cell stream. In addition, the cell location may be determined according to the time at which the carrying of service information in the cell is completed, which is not particularly limited herein.

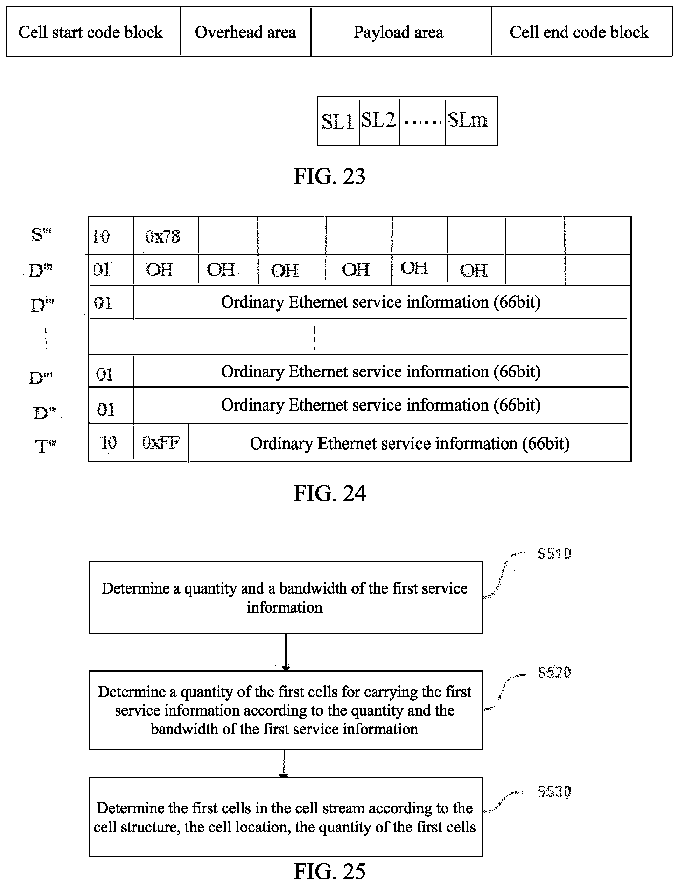

In an embodiment, the cell may carry at least one of an overhead field, indication information for indicating an order of the cells, service type information, or fault indication information, which is not particularly limited herein. As shown in FIG. 22, the start code block in the cell does not carry the service type information, but carries the overhead field OH. In addition, as shown in FIG. 23, a location padded by an overhead field in a cell is referred to as an overhead area, a location padded by information such as the indication information for indicating the order of the cells, the service type information, or the fault indication information is referred to as a payload area, the payload area may be divided into a plurality of slots, and each slot can carry one piece of information, where the slots are represented by SL1, SL2, ..., and SLm, and m is a positive integer, which is not particularly limited herein. For example, as shown in FIG. 24, FIG. 24 is a schematic diagram of ordinary Ethernet service information carried in a payload area.

In an embodiment, the cells in the cell stream may be first cells, or second cells, or may be a combination of first cells and second cells, and the cell structure of the first cell and the cell structure of the second cell may be the same, which is not particularly limited herein.

In an embodiment, the cell structures of the cells are each formed by a plurality of code blocks having a length of 66 bits defined in the 64B/66B encoding rule, i.e., assembled from a start code block of the cell, a data code block of the cell, and an end code block of the cell in sequence. The number of data code blocks in the cell is not limited. The data code block is used for carrying at least one of an overhead field, indication information for indicating an order of the cells, service type information, or fault indication information. The content of the start code block of the cell may be padded according to the content of a preamble and a frame interval of an Ethernet packet. The start code block of the cell is a start flag of the cell. The end code block of the cell is an end flag of the cell. As shown in FIG. 4, S‴ represents the start code block of the cell, D‴ represents the data code block of the cell, and T‴ represents the end code block of the cell. Since the start code block of the cell is also a code block having a length of 66 bits, the last seven bytes in the start code block of the cell may carry at least one of an overhead field, indication information for indicating an order of the cells, service type information, or fault indication information. Similarly, the last few bytes in the end code block may also carry at least one of an overhead field, indication information for indicating an order of the cells, service type information, or fault indication information. For example, the last seven bytes of T₇ may carry at least one of an overhead field of seven bytes, indication information for indicating an order of the cells, service type information, or fault indication information. As shown in FIG. 5, each of unpadded squares represents a byte location that can be used for padding at least one of an overhead field, indication information for indicating an order of the cells, service type information, or fault indication information. In addition, as shown in FIG. 6, both the first cell and the second cell carry sequence numbers 1, 2, ..., X (X being a positive integer), which occur cyclically from 1 to X, and which may be used to determine the locations of the cells, which is not particularly limited herein.

At S420, the first cell in the cell stream is determined according to the cell structure, the cell location, and the first service information.

At S430, the second cell in the cell stream is determined according to the cell structure, the cell location, and the second service information.

In an embodiment, the first cell and the second cell have a same length, and each of the first cell and the second cell has a cell start code block, a cell data code block, and a cell end code block. Both the cell structure of the first cell and the cell structure of the second cell may be formed by a cell start code block, a cell data code block, and a cell end code block in sequence.

In this embodiment, with the service information processing method including the above steps S410 to S430, a cell structure and a cell location of each cell in a cell stream is determined, then the first cell in the cell stream is determined according to the cell structure, the cell location, and the first service information, and the second cell in the cell stream is determined according to the cell structure, the cell location, and the second service information.

For example, in a scenario in which the second cell is sent while fragmented encoding is being performed on the customer packet, starting from the first customer packet, a start code block S' of the first data packet of the customer packet is placed at a cell start code block S‴ of the 1st second cell in the cell. If the fragmented encoding of the customer packet has not been completed at the last code block in the cell location of the second cell, the last code block in the cell location of the second cell is directly encoded into a cell end code block T"', then the second cell is sent, and the first code block in a next second cell is encoded into a cell start code block S"', to continue with fragmented encoding of the remaining part of the customer packet. Therefore, with this method in this embodiment, the first block in each cell must be a cell start code block S‴, and the last code block in each cell must be a cell end code block T‴.

In an embodiment, as shown in FIG. 25, S420 is further described, and S420 may include the following steps S510, S520, and S530.

At S510, a quantity and a bandwidth of the first service information are determined.

At S520, a quantity of the first cells for carrying the first service information is determined according to the quantity and the bandwidth of the first service information.

At S530, the first cells in the cell stream are determined according to the cell structure, the cell location, the quantity of the first cells.

In this embodiment, with the service information processing method including the above steps S510 to S530, a quantity and a bandwidth of the first service information are determined first, then a quantity of the first cells for carrying the first service information is determined according to the quantity and the bandwidth of the first service information, and the first cells in the cell stream are determined according to the cell structure, the cell location, the quantity of the first cells, which is not particularly limited herein.

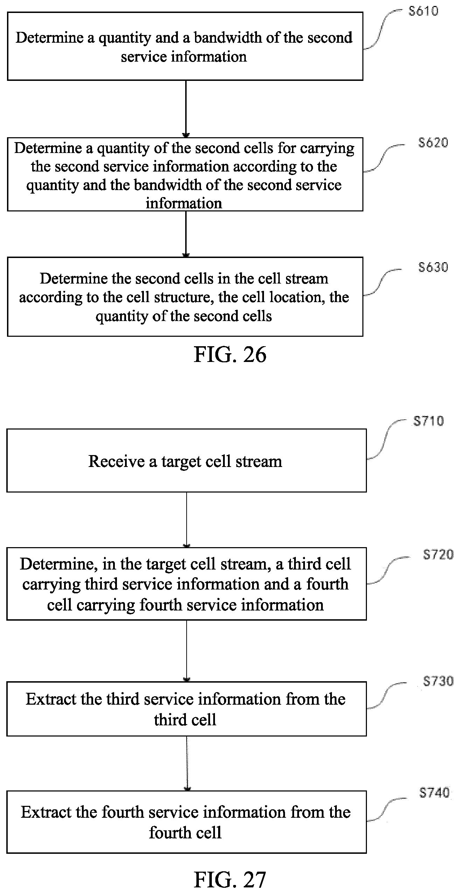

In an embodiment, as shown in FIG. 26, S430 is further described, and S430 may include the following steps S610, S620, and S630.

At S610, a quantity and a bandwidth of the second service information are determined.

At S620, a quantity of the second cells for carrying the second service information is determined according to the quantity and the bandwidth of the second service information.

At S630, the second cells in the cell stream are determined according to the cell structure, the cell location, the quantity of the second cells.

In this embodiment, with the service information processing method including the above steps S610 to S630, a quantity and a bandwidth of the second service information are determined first, then a quantity of the second cells for carrying the second service information is determined according to the quantity and the bandwidth of the second service information, and finally the second cells in the cell stream are determined according to the cell structure, the cell location, the quantity of the second cells, which is not particularly limited herein.

In an embodiment, as shown in FIG. 27, the service information processing method may further include the following steps S710, S720, S730, and S740.

At S710, a target cell stream is received.

At S720, a third cell carrying third service information and a fourth cell carrying fourth service information are determined in the target cell stream.

In an embodiment, the third service information may be high-QoS service information, such as a CBR service, high-QoS Ethernet service information (e.g., ethernet Common Public Radio Interface (eCPRI) service information), voice service information, video service information, game service information, etc. The high-QoS service information may be encapsulated in various formats, such as an eCPRI protocol message format or an Ethernet packet format. The third service information may also be ordinary Ethernet service information. The fourth service information may be ordinary Ethernet service information, such as download service information or the like, or may be high-QoS service information, which is not particularly limited herein.

In an embodiment, the third service information may be carried in the third cell by mapping, and the fourth service information may be carried in the fourth cell by placement, which is not particularly limited herein.

At S730, the third service information is extracted from the third cell.

In an embodiment, the cell structure of the third cell may be the same as the cell structure of the first cell, and the details will not be repeated herein.

At S740, the fourth service information is extracted from the fourth cell.

In an embodiment, the cell structure of the fourth cell may be the same as the cell structure of the second cell, and the details will not be repeated herein.

In this embodiment, with the service information processing method including the above steps S710 to S740, a target cell stream is received first, then a third cell carrying third service information and a fourth cell carrying fourth service information are determined in the target cell stream, and finally the third service information is extracted from the third cell and the fourth service information is extracted from the fourth cell, which is not particularly limited herein.

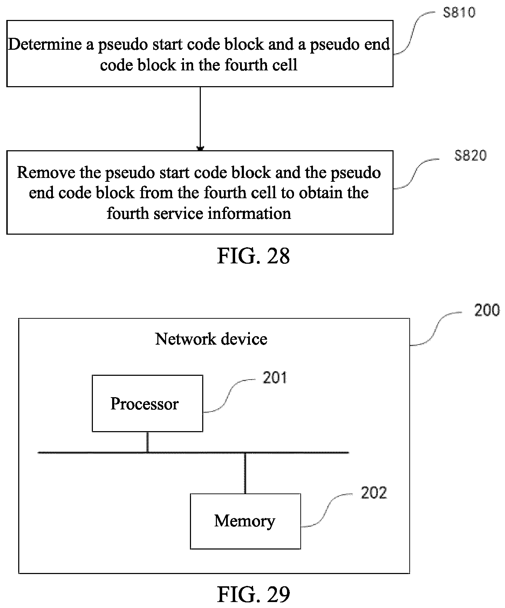

In an embodiment, as shown in FIG. 28, S740 is further described. S740 may include the following steps S810 and S820.

At S810, a pseudo start code block and a pseudo end code block are determined in the fourth cell.

At S820, the pseudo start code block and the pseudo end code block are removed from the fourth cell to obtain the fourth service information.

In this embodiment, with the service information processing method including the above steps S810 to S820, a pseudo start code block and a pseudo end code block are determined in the fourth cell, and then the pseudo start code block and the pseudo end code block are removed from the fourth cell to obtain the fourth service information. In other words, after the target cell stream is received, the pseudo start code block and the pseudo end code block may be removed from the fourth cell to retain valid service information, thus obtaining the complete fourth service information.

It should be noted that a format of the start code block, a format of the true start code block, and a format of the pseudo start code block in all of the above embodiments each include an S code block format defined in 802.3 protocols or other format types, and a format of the end code block, a format of the true end code block, and a format of the pseudo end code block each include a T code block format defined in 802.3 protocols or other format types.

In addition, referring to FIG. 29, an embodiment of the present disclosure provides a network device. The network device 200 includes a memory 202, a processor 201, and a computer program stored in the memory 202 and executable by the processor 201.

The processor 201 and the memory 202 may be connected by a bus or in other ways.

The memory 202, as a non-transitory computer-readable storage medium, may be configured for storing a non-transitory software program and a non-transitory computer-executable program. In addition, the memory 202 may include a high-speed random access memory, and may also include a non-transitory memory, e.g., at least one magnetic disk storage device, flash memory device, or other non-transitory solid-state storage device. In some implementations, the memory 202 may include memories located remotely from the processor 201, and the remote memories may be connected to the processor 201 via a network. Examples of the network include the Internet, an intranet, a local area network, a mobile communication network, and combinations thereof.

The non-transitory software program and instructions required to implement the service information processing method of the foregoing embodiments are stored in the memory 202, and when executed by the processor 201, cause the processor 201 to implement the service information processing method of the foregoing embodiments, for example, implement the method steps S110 to S120 in FIG. 2, the method steps S210 to 220 in FIG. 7, the method steps S310 to S320 in FIG. 10, the method steps S410 to S430 in FIG. 21, the method operation S510 to S530 in FIG. 25, the method steps S610 to S630 in FIG. 26, the method steps S710 to S740 in FIG. 27, or the method steps S810 to S820 in FIG. 28.

The device embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure provides a computer-readable storage medium, storing computer-executable instructions which, when executed by a processor or controller, causes the processor or controller to implement for example, the method steps S110 to S120 in FIG. 2, the method steps S210 to 220 in FIG. 7, the method steps S310 to S320 in FIG. 10, the method steps S410 to S430 in FIG. 21, the method operation S510 to S530 in FIG. 25, the method steps S610 to S630 in FIG. 26, the method steps S710 to S740 in FIG. 27, or the method steps S810 to S820 in FIG. 28.

In addition, an embodiment of the present disclosure provides a computer program product, including a computer program or computer instructions stored in a computer-readable storage medium. The computer program or the computer instructions, when read from the computer-readable storage medium and executed by a processor of a computer device, cause the computer device to implement the service information processing method according to the above embodiments, for example, implement the method steps S110 to S120 in FIG. 2, the method steps S210 to 220 in FIG. 7, the method steps S310 to S320 in FIG. 10, the method steps S410 to S430 in FIG. 21, the method operation S510 to S530 in FIG. 25, the method steps S610 to S630 in FIG. 26, the method steps S710 to S740 in FIG. 27, or the method steps S810 to S820 in FIG. 28.

In the embodiments of the present disclosure, by placing second service information at a second cell and directly sending the second service information at the second cell, the mapping process of carrying the second service information in a cell by mapping is omitted, such that the mapping process can be simplified, the bearer efficiency is improved, and the bandwidth utilization is improved.

Those having ordinary skills in the art can understand that all or some of the operations in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information passing medium.

## Claims

1. A service information processing method, performed by a processor of network device, the method comprising:
mapping first service information to a first cell, comprising encoding the first service information, then converting encoded code blocks into a bit stream or bytes, and then mapping the bit stream or bytes to and carrying the bit stream or bytes by the first cell, and transmitting the first cell (S110);
performing fragmented encoding on each data packet of second service information to obtain a plurality of encoded code blocks (S310); and
assembling the plurality of encoded code blocks according to a preset rule to obtain the plurality of pieces of code fragment information (S320),
wherein each of the plurality of pieces of code fragment information includes a fragment start code block, a fragment data code block, and a fragment end code block; and
placing each of the plurality of pieces of code fragment information at a respective second cell (S220), and transmitting the second service information at each respective second cell (S120), wherein the first cell anc each second cell are each formed by a plurality of code blocks assembled in sequence from a start code block, a data code block, and an end code block.

2. The method of claim 1, wherein:
a length of each of the plurality of pieces of code fragment information is equal to a length of a second cell;
or
lengths of at least two neighboring pieces of code fragment information among the plurality of pieces of code fragment information are not equal to a length of a second cell, and a sum of the lengths of the at least two neighboring pieces of code fragment information is equal to an integer multiple of the length of a second cell.

3. The method of claim 1, wherein a start code block of the data packet carries a packet code block type flag value, and the packet code block type flag value is used to determine a type of a start code block of a current data packet, a type of an end code block of a previous data packet, and a type of an end code block after the start code block of the current data packet.

4. The method of claim 1, wherein a start code block of the second cell carries a cell code block type flag value, and the cell code block type flag value is used to determine a type of a start code block of a current second cell, a type of an end code block of a previous second cell, and a type of an end code block after the start code block of the current second cell.

5. The method of claim 1, further comprising:
determining a cell structure and a cell location of each cell in a cell stream (S410);
determining the first cell in the cell stream according to the cell structure, the cell location, and the first service information (S420); and
determining the second cell in the cell stream according to the cell structure, the cell location, and the second service information (S430),
wherein the cell location in the cell stream remains unchanged.

6. The method of claim 5, wherein determining the first cell in the cell stream according to the cell structure, the cell location, and the first service information (S420) comprises:
determining a quantity and a bandwidth of the first service information (S510);
determining a quantity of the first cells for carrying the first service information according to the quantity and the bandwidth of the first service information (S520); and
determining the first cells in the cell stream according to the cell structure, the cell location, the quantity of the first cells (S530).

7. The method of claim 5, wherein determining the second cell in the cell stream according to the cell structure, the cell location, and the second service information (S430) comprises:
determining a quantity and a bandwidth of the second service information (S610);
determining a quantity of the second cells for carrying the second service information according to the quantity and the bandwidth of the second service information (S620); and
determining the second cells in the cell stream according to the cell structure, the cell location, the quantity of the second cells (S630).

8. The method of claim 1, further comprising:
receiving a target cell stream (S710);
determining, in the target
cell stream, a third cell carrying third service information and a fourth cell carrying fourth service information (S720);
extracting the third service information from the third cell (S730); and
extracting the fourth service information from the fourth cell (S740).

9. A network device (200), comprising: a memory (202), a processor (201), and a computer program stored in the memory (202) and executable by the processor (201), wherein the computer program, when executed by the processor (201), causes the processor (201) to perform the method of any one of claims 1 to 8.

10. A computer-readable storage medium, storing computer-executable instructions which, when executed by a processor of a network device, causes the processor to perform the method of any one of claims 1 to 8.

## Patentansprüche

1. Dienstinformationsverarbeitungsverfahren, das von einem Prozessor einer Netzwerkvorrichtung durchgeführt wird, wobei das Verfahren umfasst:
Zuordnen von ersten Dienstinformationen zu einer ersten Zelle, umfassend das Codieren der ersten Dienstinformationen, dann Umwandeln codierter Codeblöcke in einen Bitstrom oder Bytes und dann das Zuordnen des Bitstroms oder der Bytes zu der ersten Zelle und das Transportieren des Bitstroms oder der Bytes durch die erste Zelle und Übertragen der ersten Zelle (S110);
Durchführen einer fragmentierten Codierung an jedem Datenpaket von zweiten Dienstinformationen, um eine Vielzahl von codierten Codeblöcken zu erhalten (S310); und
Zusammenstellen der Vielzahl von codierten Codeblöcken gemäß einer voreingestellten Regel, um die Vielzahl von Codefragmentinformationseinheiten zu erhalten (S320),
wobei jede der Vielzahl von Codefragmentinformationseinheiten einen Fragmentstart-Codeblock, einen Fragmentdaten-Codeblock und einen Fragmentende-Codeblock umfasst; und
Platzieren jeder der Vielzahl von Codefragmentinformationseinheiten an einer jeweiligen zweiten Zelle (S220),
und Übertragen der zweiten Dienstinformationen an jeder jeweiligen zweiten Zelle (S120), wobei die erste Zelle und jede zweite Zelle jeweils durch eine Vielzahl von Codeblöcken gebildet werden, die nacheinander aus einem Start-Codeblock, einem Daten-Codeblock und einem Ende-Codeblock zusammengestellt sind.

2. Verfahren nach Anspruch 1, wobei:
eine Länge jeder der Vielzahl von Codefragmentinformationseinheiten gleich einer Länge einer zweiten Zelle ist;
oder
Längen von mindestens zwei benachbarten Codefragmentinformationseinheiten unter der Vielzahl von Codefragmentinformationseinheiten nicht gleich einer Länge einer zweiten Zelle sind und eine Summe der Längen der mindestens zwei benachbarten Codefragmentinformationseinheiten gleich einem ganzzahligen Vielfachen der Länge einer zweiten Zelle ist.

3. Verfahren nach Anspruch 1, wobei ein Start-Codeblock des Datenpakets einen Paketcodeblock-Typflagwert trägt und der Paketcodeblock-Typflagwert verwendet wird, um einen Typ eines Start-Codeblocks eines aktuellen Datenpakets, einen Typ eines Ende-Codeblocks eines vorherigen Datenpakets und einen Typ eines Ende-Codeblocks nach dem Start-Codeblock des aktuellen Datenpakets zu bestimmen.

4. Verfahren nach Anspruch 1, wobei ein Start-Codeblock der zweiten Zelle einen Zellencodeblock-Typflagwert trägt und der Zellencodeblock-Typflagwert verwendet wird, um einen Typ eines Start-Codeblocks einer aktuellen zweiten Zelle, einen Typ eines Ende-Codeblocks einer vorherigen zweiten Zelle und einen Typ eines Ende-Codeblocks nach dem Start-Codeblock der aktuellen zweiten Zelle zu bestimmen.

5. Verfahren nach Anspruch 1, ferner umfassend:
Bestimmen einer Zellenstruktur und eines Zellenorts jeder Zelle in einem Zellenstrom (S410);
Bestimmen der ersten Zelle in dem Zellenstrom gemäß der Zellenstruktur, dem Zellenort und den ersten Dienstinformationen (S420); und
Bestimmen der zweiten Zelle in dem Zellenstrom gemäß der Zellenstruktur, dem Zellenort und den zweiten Dienstinformationen (S430),
wobei der Zellenort in dem Zellenstrom unverändert bleibt.

6. Verfahren nach Anspruch 5, wobei das Bestimmen der ersten Zelle in dem Zellenstrom gemäß der Zellenstruktur, dem Zellenort und den ersten Dienstinformationen (S420) umfasst:
Bestimmen einer Menge und einer Bandbreite der ersten Dienstinformationen (S510);
Bestimmen einer Menge der ersten Zellen zum Transportieren der ersten Dienstinformationen gemäß der Menge und der Bandbreite der ersten Dienstinformationen (S520); und
Bestimmen der ersten Zellen in dem Zellenstrom gemäß der Zellenstruktur, dem Zellenort und der Menge der ersten Zellen (S530).

7. Verfahren nach Anspruch 5, wobei das Bestimmen der zweiten Zelle in dem Zellenstrom gemäß der Zellenstruktur, dem Zellenort und den zweiten Dienstinformationen (S430) umfasst:
Bestimmen einer Menge und einer Bandbreite der zweiten Dienstinformationen (S610);
Bestimmen einer Menge der zweiten Zellen zum Transportieren der zweiten Dienstinformationen gemäß der Menge und der Bandbreite der zweiten Dienstinformationen (S620); und
Bestimmen der zweiten Zellen in dem Zellenstrom gemäß der Zellenstruktur, dem Zellenort und der Menge der zweiten Zellen (S630).

8. Verfahren nach Anspruch 1, ferner umfassend:
Empfangen eines Zielzellenstroms (S710);
Bestimmen, in dem Zielzellenstrom, einer dritten Zelle, die dritte Dienstinformationen trägt, und einer vierten Zelle, die vierte Dienstinformationen trägt (S720);
Extrahieren der dritten Dienstinformationen aus der dritten Zelle (S730); und
Extrahieren der vierten Dienstinformationen aus der vierten Zelle (S740).

9. Netzwerkvorrichtung (200), umfassend: einen Speicher (202), einen Prozessor (201) und ein Computerprogramm, das in dem Speicher (202) gespeichert ist und von dem Prozessor (201) ausgeführt werden kann, wobei das Computerprogramm, wenn es von dem Prozessor (201) ausgeführt wird, den Prozessor (201) dazu veranlasst, das Verfahren nach einem der Ansprüche 1 bis 8 durchzuführen.

10. Computerlesbares Speichermedium, das computerausführbare Anweisungen speichert, die, wenn sie von einem Prozessor der Netzwerkvorrichtung ausgeführt werden, den Prozessor dazu veranlassen, das Verfahren nach einem der Ansprüche 1 bis 8 durchzuführen.

## Revendications

1. Procédé de traitement d'informations de service, mis en œuvre par un processeur de dispositif de réseau, le procédé comprenant :
associer une première information de service à une première cellule, comprenant coder la première information de service, puis convertir les blocs de code codés en un flux binaire ou octets, puis associer le flux binaire ou octets et transporter le flux binaire ou octets par la première cellule, et transmettre la première cellule (S110) ;
effectuer un codage fragmenté sur chaque paquet de données de la deuxième information de service pour obtenir une pluralité de blocs de code codés (S310); et
assembler la pluralité de blocs de code codés selon une règle prédéfinie pour obtenir la pluralité d'éléments d'informations de fragment de code (S320),
dans lequel chacune de la pluralité d'éléments d'informations de fragment de code comprend un bloc de code de début de fragment, un bloc de code de données de fragment et un bloc de code de fin de fragment ; et
placer chacune de la pluralité d'éléments d'informations de fragment de code dans une deuxième cellule respective (S220),
et transmettre la deuxième information de service au niveau de chaque deuxième cellule respective (S120), dans lequel la première cellule et chaque deuxième cellule sont chacune formées par une pluralité de blocs de code assemblés en séquence à partir d'un bloc de code de début, d'un bloc de code de données et d'un bloc de code de fin.

2. Procédé selon la revendication 1, dans lequel :
une longueur de chacune de la pluralité d'éléments d'informations de fragment de code est égale à une longueur d'une deuxième cellule ;
ou
les longueurs d'au moins deux éléments adjacents d'informations de fragment de code parmi la pluralité d'éléments d'informations de fragment de code ne sont pas égales à une longueur d'une deuxième cellule, et une somme des longueurs des au moins deux éléments adjacents d'informations de fragment de code est égale à un multiple entier de la longueur d'une deuxième cellule.

3. Procédé selon la revendication 1, dans lequel un bloc de code de début du paquet de données porte une valeur d'indicateur de type bloc de code de paquet, et la valeur d'indicateur de type bloc de code de paquet est utilisée pour déterminer un type d'un bloc de code de début d'un paquet de données actuel, un type d'un bloc de code de fin d'un paquet de données précédent, et un type d'un bloc de code de fin après le bloc de code de début du paquet de données actuel.

4. Procédé selon la revendication 1, dans lequel un bloc de code de début de la deuxième cellule porte une valeur d'indicateur de type de bloc de code de cellule, et la valeur d'indicateur de type de bloc de code de cellule est utilisée pour déterminer un type d'un bloc de code de début d'une deuxième cellule actuelle, un type d'un bloc de code de fin d'une deuxième cellule précédente, et un type d'un bloc de code de fin après le bloc de code de début de la deuxième cellule actuelle.

5. Procédé selon la revendication 1, comprenant en outre :
déterminer une structure de cellule et une localisation de cellule de chaque cellule dans un flux de cellules (S410) ;
déterminer la première cellule dans le flux de cellules en fonction de la structure de cellule, de la localisation de cellule et de la première information de service (S420) ; et
déterminer la deuxième cellule dans le flux de cellules en fonction de la structure de cellule, de la localisation de cellule et de la deuxième information de service (S430),
dans lequel la localisation de cellule dans le flux de cellules reste inchangé.

6. Procédé selon la revendication 5, dans lequel la détermination de la première cellule dans le flux de cellules en fonction de la structure de cellule, de la localisation de cellule et de la première information de service (S420) comprend :
déterminer une quantité et une bande passante de la première information de service (S510) ;
déterminer une quantité des premières cellules pour transporter la première information de service en fonction de la quantité et de la bande passante de la première information de service (S520) ; et
déterminer les premières cellules dans le flux de cellules en fonction de la structure de cellule, de la localisation de cellule, de la quantité des premières cellules (S530).

7. Procédé selon la revendication 5, dans lequel la détermination de la deuxième cellule dans le flux de cellules en fonction de la structure de cellule, de la localisation de cellule et de la deuxième information de service (S430) comprend :
déterminer une quantité et une bande passante de la deuxième information de service (S610) ;
déterminer une quantité des deuxièmes cellules pour transporter la deuxième information de service en fonction de la quantité et de la bande passante de la deuxième information de service (S620) ; et
déterminer les deuxièmes cellules dans le flux de cellules en fonction de la structure de cellule, de la localisation de cellule, de la quantité des deuxièmes cellules (S630).

8. Procédé selon la revendication 1, comprenant en outre :
recevoir un flux de cellules cibles (S710) ;
déterminer, dans le flux de cellules cibles, une troisième cellule portant une troisième information de service et une quatrième cellule portant une quatrième information de service (S720) ;
extraire la troisième information de service de la troisième cellule (S730) ; et
extraire la quatrième information de service de la quatrième cellule (S740).

9. Dispositif de réseau (200), comprenant : une mémoire (202), un processeur (201) et un programme informatique stocké dans la mémoire (202) et exécutable par le processeur (201), dans lequel le programme informatique, lorsqu'il est exécuté par le processeur (201), amène le processeur (201) à mettre en oeuvre le procédé selon l'une quelconque des revendications 1 à 8.

10. Support de stockage lisible par ordinateur, stockant des instructions exécutables par ordinateur qui, lorsqu'elles sont exécutées par un processeur d'un dispositif de réseau, amènent le processeur à mettre en œuvre le procédé selon l'une quelconque des revendications 1 à 8.
